(19) Europäisches Patentamt
European Patent Office
Office européen des brevets

(11) **EP 3 447 654 B1**

(12) # FASCICULE DE BREVET EUROPEEN

(45) Date de publication et mention de la délivrance du brevet:
**01.03.2023 Bulletin 2023/09**

(21) Numéro de dépôt: **18190545.6**

(22) Date de dépôt: **23.08.2018**

(51) Classification Internationale des Brevets (IPC):
**G06F 17/18** (2006.01)   **G01C 21/16** (2006.01)
**G01C 21/20** (2006.01)

(52) Classification Coopérative des Brevets (CPC):
**G06F 17/18; G01C 21/165; G01C 21/206**

(54) **PROCÉDÉ DE DÉTERMINATION DE LA TRAJECTOIRE D'UN OBJET MOBILE, PROGRAMME ET DISPOSITIF APTES À LA MISE EN OEUVRE DE CE PROCÉDÉ**

BESTIMMUNGSVERFAHREN DER BEWEGUNGSBAHN EINES BEWEGLICHEN OBJEKTS, PROGRAMM UND VORRICHTUNG ZUR UMSETZUNG DIESES VERFAHRENS

METHOD FOR DETERMINING THE TRAJECTORY OF A MOVING OBJECT, PROGRAM AND DEVICE FOR IMPLEMENTING SAID METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.08.2017 FR 1757887**

(43) Date de publication de la demande:
**27.02.2019 Bulletin 2019/09**

(73) Titulaire: **Universite Gustave Eiffel
77454 Marne-la-Vallée Cedex 2 (FR)**

(72) Inventeurs:
• **RENAUDIN, Valérie
44340 Bouguenais (FR)**
• **COMBETTES, Christophe
68300 Saint Louis (FR)**

(74) Mandataire: **Cabinet Beau de Loménie
158, rue de l'Université
75340 Paris Cedex 07 (FR)**

(56) Documents cités:
• **Yingwei Zhao: "Optimized Filter Design for Non-Differential GPS/IMU Integrated Navigation", PhD Thesis, mai 2015 (2015-05), pages 1-141, XP055471648, Extrait de l'Internet: URL:http://tuprints.ulb.tu-darmstadt.de/4929/7/tud_dissertation.pdf [extrait le 2018-04-30]**

• **ZHANG SHENGZHI ET AL: "A miniature shoe-mounted orientation determination system for accurate indoor heading and trajectory tracking", REVIEW OF SCIENTIFIC INSTRUMENTS, AIP, MELVILLE, NY, US, vol. 87, no. 6, 28 juin 2016 (2016-06-28), XP012208865, ISSN: 0034-6748, DOI: 10.1063/1.4954724 [extrait le 1901-01-01]**
• **JIMENEZ A R ET AL: "Indoor pedestrian navigation using an INS/EKF framework for yaw drift reduction and a foot-mounted IMU", POSITIONING NAVIGATION AND COMMUNICATION (WPNC), 2010 7TH WORKSHOP ON, IEEE, PISCATAWAY, NJ, USA, 11 mars 2010 (2010-03-11), pages 135-143, XP031811025, ISBN: 978-1-4244-7158-4**
• **CHRISTOPHE COMBETTES ET AL: "Delay Kalman Filter to Estimate the Attitude of a Mobile Object with Indoor Magnetic Field Gradients", MICROMACHINES, vol. 7, no. 5, 2 mai 2016 (2016-05-02), page 79, XP055471639, CH ISSN: 2072-666X, DOI: 10.3390/mi7050079**
• **VALÉRIE RENAUDIN ET AL: "Magnetic, Acceleration Fields and Gyroscope Quaternion (MAGYQ)-Based Attitude Estimation with Smartphone Sensors for Indoor Pedestrian Navigation", SENSORS, vol. 14, no. 12, 2 décembre 2014 (2014-12-02), pages 22864-22890, XP055471645, DOI: 10.3390/s141222864**

EP 3 447 654 B1

- **RENAUDIN VALERIE ET AL: "Toward a free inertial pedestrian navigation reference system", 2014 INTERNATIONAL CONFERENCE ON INDOOR POSITIONING AND INDOOR NAVIGATION (IPIN), IEEE, 27 octobre 2014 (2014-10-27), pages 167-176, XP033217957, DOI: 10.1109/IPIN.2014.7275481**

**Description**

Domaine de l'invention

Le présent exposé concerne la détermination d'une trajectoire d'un objet mobile.

Par « trajectoire », on entend l'ensemble des positions de l'objet mobile sur une plage de temps déterminée.

L'objet mobile peut être un piéton, ou bien un objet tel qu'un véhicule automobile, une bicyclette, ou encore un drone.

Arrière-plan de l'invention

Diverses méthodes ont été proposées jusqu'ici pour déterminer la trajectoire d'un objet mobile.

Une première famille de méthodes consiste à établir à l'avance une base de données géo-localisée de signaux radio puis, en phase de fonctionnement, à interroger cette base de données. Les signaux radio peuvent comprendre des signaux WiFi (méthodes dites « WiFi Fingerprinting » en anglais) et/ou d'autres signaux radio pertinents (méthodes dites « Signal of Opportunity Fingerprinting » en anglais).

Une deuxième famille de méthodes consiste à fusionner des mesures issues de divers capteurs, notamment d'un récepteur satellitaire et/ou d'une centrale inertielle comprenant un accéléromètre et un gyromètre, avec des signaux externes reçus de systèmes dédiés déployés à l'avance, tels que des systèmes de type iBeacon™, RFID ou encore UWB (« Ultra-WideBand » en anglais).

Ces deux familles de méthodes présentent l'inconvénient de dépendre, en partie ou complètement, d'une infrastructure spécifique déployée à l'avance. Loin de cette infrastructure spécifique, la détermination de la trajectoire présente une erreur importante.

Au sens du présent exposé, l'« erreur » désigne le rapport entre l'erreur en position commise en fin de parcours et la longueur totale du parcours. Plus précisément, l'erreur est définie comme le quotient de l'écart en position entre la trajectoire déterminée et la trajectoire réellement parcourue, l'écart étant évalué au bout d'une distance de parcours définie à l'avance, et de la distance réellement parcourue. Autrement dit :

$$erreur\ (\%) = \left| \frac{écart\ en\ position\ (m)}{distance\ parcourue\ (m)} \right|$$

Une troisième famille de méthodes comprend, afin de diminuer l'erreur, le fait de détecter, à l'aide d'une centrale inertielle comprenant un accéléromètre et un gyromètre, certaines phases particulières du mouvement de marche d'un piéton, par exemple des phases où le pied est à plat au sol et où la vitesse ou l'accélération mesurées sont nulles (méthodes dites ZUPT pour « Zéro velocity UpdaTe » et ZARU pour « Zéro AcceleRation Update » en anglais). Un exemple de méthode ZUPT est présenté dans l'article « A New Zéro Velocity Update Algorithm for the Shoe-Mounted Personal Navigation System based on IMU », Z. Xiao-dong étal., 34th Chinese Control Conférence, 2015.

Cependant, ces méthodes sont spécifiques à une unité de capteurs portée au niveau du pied et ne sont pas généralisables à d'autres objets mobiles qu'un piéton.

En outre, toutes les méthodes évoquées ci-dessus présentent une erreur importante dans le cas où l'objet mobile se déplace à l'intérieur d'un bâtiment (utilisation dite « indoors » en anglais). En effet, à l'intérieur d'un bâtiment, les mesures issues de magnétomètres et de récepteurs satellitaires sont fortement dégradées, notamment à cause d'interférences électromagnétiques.

Il existe donc un besoin d'un procédé et d'un dispositif capables de déterminer la trajectoire d'un objet mobile avec une erreur faible, même lorsque l'objet mobile se déplace à l'intérieur d'un bâtiment, et sans recourir à aucune infrastructure spécifique déployée à l'avance ou mesure effectuée à l'avance.

Objet et résumé de l'invention

Le présent exposé vise à répondre au moins partiellement à ce besoin.

Ce but est atteint grâce au procédé de détermination d'une trajectoire d'un objet mobile défini par la revendication 1.

Au moins l'une parmi l'acquisition d'un vecteur accélération de l'objet mobile, l'acquisition d'un vecteur vitesse angulaire de l'objet mobile, l'acquisition d'un vecteur champ magnétique local au niveau de l'objet mobile, et l'acquisition d'une phase d'un signal émis par un système mondial de navigation par satellite est typiquement effectuée à partir de signaux de capteurs de l'objet mobile.

Un filtre de Kalman est une méthode de calcul susceptible d'être mise en oeuvre par ordinateur et permettant d'estimer les états d'un système dynamique à partir d'une série de données d'entrée incomplètes ou bruitées. Le filtre de Kalman est modélisé par une équation d'état (1), et une équation de mesure (2). Ces équations sont du type :

$$\begin{cases} X_k = F_{k-1,k}X_{k-1} + w_{k-1} & (1) \\ y_k = H_k X_k + \eta_k & (2) \end{cases}$$

où k est l'instant courant, k-1 l'instant précédent, X l'état (intrinsèque) du système, $F_{k-1,k}$ la fonction de transition entre les instants k et k-1, y la grandeur observée (mesurée), H la fonction de mesure, w le bruit du modèle, et η le bruit de mesure. Les variables X, y, w et η peuvent être des vecteurs à une ou plusieurs composantes. Les variables H et F peuvent être des matrices.

L'équation d'état (1), aussi appelée équation d'évolution, traduit l'évolution du système dynamique. L'équation de mesure (2), aussi appelée équation d'observation, traduit la relation entre les grandeurs observables mesurées et l'état intrinsèque du système.

La mise en oeuvre du filtre de Kalman comprend une étape d'estimation d'une valeur de l'état suivant (k+1) à partir de l'état courant (k), et une étape de correction de la valeur obtenue à partir de la mesure $y_k$. Ces étapes sont largement détaillées dans la littérature (par exemple dans l'ouvrage Kalman Filtering: Theory and Practice Using MATLAB, Mohinder S. Grewal, Angus P. Andrews, 2nd édition, John Wiley & Sons, 2001) et ne sont donc pas réexpliquées ici dans le cas général.

Un filtre de Kalman étendu (« Extended Kalman Filter » en anglais, ci-après désigné par « EKF ») est une variante du filtre de Kalman qui est utilisée pour des systèmes non-linéaires. Pour de tels systèmes, les équations permettant de modéliser le problème ne sont pas linéaires ; mais si la fonction de transition et la fonction de mesure sont dérivables, il est possible de linéariser localement ces fonctions autour de l'état précédent. Les matrices $F_{k-1,k}$ et H sont ainsi remplacées par leurs jacobiennes. Ceci est largement détaillé dans la littérature (par exemple dans l'ouvrage *Kalman Filtering: Theory and Practice Using MATLAB* mentionné ci-dessus) et n'est donc pas réexpliqué ici en détail.

Pour mettre en oeuvre un EKF dans un procédé selon le présent exposé, le vecteur d'état (qui dans la suite pourra être simplement appelé « l'état ») de l'EKF comprend un état de position de l'objet mobile.

Au sens du présent exposé, « état de position » désigne un vecteur comprenant au moins un parmi un vecteur position de l'objet mobile, un vecteur vitesse instantanée et un vecteur accélération de l'objet mobile. L'état de position permet ainsi de décrire physiquement la position de l'objet mobile et/ou l'évolution de cette position au cours du temps.

Le vecteur position, le vecteur vitesse instantanée et le vecteur accélération peuvent être des vecteurs à trois ou à deux composantes. Des vecteurs à trois composantes permettent de décrire le déplacement de l'objet mobile dans l'espace, donc dans le cas le plus général. Des vecteurs à deux composantes permettent de décrire le déplacement de l'objet mobile dans un plan. Ceci peut être suffisant si l'objet mobile est destiné à ne se déplacer que dans un espace plan délimité, comme par exemple le sol d'un entrepôt.

Les vecteurs de l'état de position peuvent être exprimés dans tout repère (cartésien, cylindrique, polaire, etc.), de préférence dans un repère cartésien. Le repère est de préférence fixe par rapport à la Terre.

Plus généralement, tous les éléments de l'état de l'EKF sont de préférence exprimés dans un repère cartésien, qui de préférence est fixe par rapport à la Terre.

Dans certains modes de réalisation, l'état de position comprend un vecteur position de l'objet mobile.

L'étape d'estimation consiste en une détermination initiale, éventuellement provisoire, de l'état de l'EKF. Elle peut être réalisée par mesure, par calcul (notamment grâce à l'équation (1) d'état de l'EKF) ou par combinaison des deux. L'état de position estimé est ensuite soumis à l'étape de correction.

Comme indiqué précédemment, l'étape de correction fait appel aux résultats de l'étape d'acquisition. L'étape d'acquisition ne suppose pas qu'une mesure soit disponible en permanence : elle consiste à vérifier si une mesure est disponible et, si c'est le cas, à l'acquérir. Si la mesure n'est pas disponible à un instant, l'étape d'acquisition ne renvoie aucune donnée à l'étape de correction et, par conséquent, l'état de l'EKF estimé à cet instant n'est pas corrigé.

L'étape d'acquisition, l'étape d'estimation et de correction sont effectuées de manière répétée, de manière à obtenir une succession d'états de l'EKF. Chaque répétition correspond à une itération de l'EKF. La trajectoire de l'objet mobile est obtenue en extrayant l'état de position de chacun des états de l'EKF.

Dans le procédé selon le présent exposé, l'état de l'EKF comprend un décalage entre l'horloge du récepteur satellitaire recevant ledit signal et le temps du système mondial de navigation par satellite, un vecteur vitesse instantanée et un vecteur vitesse moyenne obtenu en effectuant une moyenne des vecteurs vitesse instantanée de au moins

$$N = \frac{f_{IMU}}{f_{GNSS}}$$ états précédents du filtre de Kalman étendu.

En effet, les vecteurs vitesse instantanée sont estimés à partir de mesures effectuées à des fréquences différentes : de manière générale, les mesures issues du système mondial de navigation par satellite sont disponibles à une fréquence (typiquement de l'ordre de 5 Hz) beaucoup plus faible que les mesures d'accélération, de vitesse angulaire et de champ magnétique local (typiquement de l'ordre de 150 Hz). En prenant en compte le vecteur vitesse moyenne, on tend donc avantageusement à réduire l'erreur commise en effectuant une estimation à partir de ces mesures obtenues à des fréquences différentes.

En outre, en prenant en compte le vecteur vitesse moyenne, on tend avantageusement à réduire aussi l'erreur liée au positionnement des capteurs par rapport à l'objet mobile.

En outre, puisque les mesures issues du système mondial de navigation par satellite sont disponibles plusieurs fois par seconde, les mesures de phase prises en compte lors de l'étape de correction sont séparées de moins d'une seconde, voire de quelques dixièmes de seconde seulement. Sur un intervalle de temps aussi faible, la position du récepteur satellitaire peut être considérée comme quasiment constante. Les perturbations qui, lors d'une utilisation dite « indoors », dégradent fortement les mesures du récepteur satellitaire, s'éliminent donc quasiment entre elles lors du calcul de la différence entre ces mesures de phase. Puisqu'en outre ces mesures de phase concernent le signal émis par un même satellite, la différence entre ces mesures de phase apporte une information sur le vecteur vitesse moyenne. Puisque l'état de l'EKF comprend le vecteur vitesse moyenne, celui-ci permet d'affiner l'estimation de la trajectoire de l'objet mobile.

Ainsi, le procédé de détermination selon le présent exposé permet d'utiliser les données GNSS, même fortement dégradées comme lors d'une utilisation dite « indoors », pour affiner l'estimation de la trajectoire. Les inventeurs ont en effet constaté que, de cette manière, l'erreur est significativement plus faible qu'avec les procédés de l'art antérieur, comme cela sera détaillé plus loin, et ce en particulier lors d'une utilisation dite « indoors ». Le procédé de détermination selon le présent exposé fournit donc une estimation très précise de trajectoire en toutes conditions, même lorsque l'objet mobile se déplace à l'intérieur d'un bâtiment, et ce sans recourir à aucune infrastructure spécifique déployée à l'avance ou mesure effectuée à l'avance.

Dans certains modes de réalisation, ladite moyenne est une moyenne arithmétique non pondérée.

Cette moyenne présente l'avantage d'être aisée à calculer.

Dans certains modes de réalisation, le vecteur vitesse moyenne est une moyenne des vecteurs vitesses instantanée de exactement N états précédents du filtre de Kalman étendu.

On notera que dans ce cas, la condition ci-dessus relative à la phase du signal est équivalente à la condition que deux mesures consécutives de la phase du signal émis par un même satellite du GNSS soient disponibles.

Dans certains modes de réalisation, durant l'étape de correction, lorsque la norme du vecteur accélération mesuré est sensiblement égale à la norme de l'accélération de la pesanteur et sensiblement constante, l'état estimé de l'EKF est corrigé en fixant à zéro le vecteur vitesse instantanée.

L'étape de correction tire ainsi parti des séquences où l'objet mobile est quasiment à l'arrêt pour affiner l'estimation de la trajectoire. Cela est particulièrement utile lorsque les capteurs sont installés dans un dispositif fixé au pied d'un piéton.

Dans certains modes de réalisation, l'état de l'EKF comprend un biais de l'accéléromètre effectuant ladite mesure du vecteur accélération.

Le biais de l'accéléromètre peut ainsi être estimé en plus de l'état de position de l'objet mobile. Ceci permet de tenir compte de la dérive éventuelle de l'accéléromètre. L'estimation de la trajectoire est alors plus précise. En outre, lorsque la correction mentionnée ci-dessus est mise en oeuvre, elle tire avantage des séquences où l'objet mobile est à l'arrêt pour estimer la dérive éventuelle de l'accéléromètre.

Dans certains modes de réalisation, l'état de l'EKF comprend un vecteur d'attitude.

Au sens du présent exposé, « vecteur d'attitude » désigne un vecteur comprenant au moins un angle décrivant la rotation de l'objet mobile et/ou au moins une dérivée par rapport au temps de cet angle. Le vecteur d'attitude permet ainsi de décrire physiquement l'orientation de l'objet mobile dans le plan ou l'espace en fonction du temps. Le vecteur d'attitude peut être un vecteur à trois composante (lorsque le vecteur position, le vecteur vitesse instantanée et le vecteur accélération sont des vecteurs à trois composantes) ou à une seule composante (lorsque le vecteur position, le vecteur vitesse instantanée et le vecteur accélération sont des vecteurs à deux composantes).

L'estimation de la trajectoire est alors plus précise, car tenant compte de la rotation de l'objet mobile et non seulement de son mouvement en translation.

Dans certains modes de réalisation, l'état de l'EKF comprend un biais du vecteur d'attitude.

Dans certains modes de réalisation, durant l'étape de correction, lorsque la norme du vecteur accélération mesuré est égale à la norme de l'accélération de la pesanteur et sensiblement constante, l'état estimé de l'EKF est corrigé en fonction du vecteur accélération mesuré ou du vecteur vitesse angulaire mesuré.

L'étape de correction tire ainsi parti des séquences où la trajectoire de l'objet mobile est quasiment une translation pour affiner l'estimation de la trajectoire et de l'attitude de l'objet mobile.

Dans certains modes de réalisation, l'état de l'EKF comprend un biais du gyromètre effectuant la mesure du vecteur vitesse angulaire.

Le biais du gyromètre peut ainsi être estimé en plus de l'état de position de l'objet mobile. Ceci permet de tenir compte de la dérive éventuelle du gyromètre. L'estimation de la trajectoire est alors plus précise. En outre, lorsque la correction mentionnée ci-dessus est mise en oeuvre, elle tire avantage des séquences où la vitesse de l'objet mobile pour estimer la dérive éventuelle du gyromètre.

Dans certains modes de réalisation, le vecteur d'attitude et/ou le vecteur vitesse angulaire mesuré est exprimé sous la forme d'un quaternion.

Cette expression permet de s'affranchir de nombreuses contraintes liées à l'utilisation des angles d'Euler, et allège considérablement les calculs ; en particulier, les erreurs d'origine numérique sont diminuées.

Dans certains modes de réalisation, le biais du gyromètre est également exprimé sous la forme d'un quaternion, avec les mêmes avantages.

Dans certains modes de réalisation, durant l'étape de correction, lorsque la norme du vecteur champ magnétique local mesuré est sensiblement constante et un angle entre ledit vecteur champ magnétique local mesuré et l'accélération de la pesanteur est sensiblement égal à un angle entre ladite accélération de la pesanteur et le vecteur champ magnétique terrestre, l'état estimé de l'EKF est corrigé en fonction du vecteur champ magnétique local mesuré et/ou du vecteur vitesse angulaire mesuré.

L'étape de correction tire ainsi parti des séquences où l'attitude de l'objet mobile par rapport au champ magnétique terrestre est quasiment constante pour affiner l'estimation de la trajectoire et de l'attitude de l'objet mobile.

Dans le présent exposé, « A est corrigé en fonction de B » n'exclut pas que d'autres grandeurs que B puissent être utilisées pour corriger A.

Dans le présent exposé, « A est sensiblement égal à B » signifie que A est égal à B plus ou moins une certaine marge déterminée à l'avance. Cette marge peut notamment tenir compte du bruit du capteur utilisé pour mesurer B et/ou inclure une certaine tolérance. La marge peut être fixée arbitrairement à l'avance, ou bien être calibrée lors d'essais préalables. Sans vouloir limiter la portée du présent exposé, la marge peut être, par exemple, de 5%, 10% ou 20%.

Dans le présent exposé, « A est sensiblement constant » signifie que les différentes valeurs que prend A au cours du temps sont sensiblement égales entre elles. Ces différentes valeurs peuvent être acquises sur une fenêtre glissante. La durée de la fenêtre glissante peut être fixée arbitrairement à l'avance, ou bien être calibrée lors d'essais préalables. Sans vouloir limiter la portée du présent exposé, la durée de la fenêtre glissante peut être de 0,1 s, 0,2 s ou 0,5 s.

Dans certains modes de réalisation, le procédé comprend en outre la mesure d'une deuxième phase d'un deuxième signal émis par un deuxième système mondial de navigation par satellite.

L'estimation de la trajectoire peut ainsi tenir compte de davantage de données satellites, ce qui améliore encore la précision.

Dans certains modes de réalisation, l'état de l'EKF comprend un décalage entre l'horloge du récepteur satellitaire et le temps du deuxième système mondial de navigation par satellite, et durant l'étape de correction, lorsqu'une mesure de ladite deuxième phase et une deuxième mesure précédente de ladite deuxième phase sont disponibles, ladite deuxième mesure précédente correspondant à l'un desdits au moins N états précédents du filtre de Kalman étendu, et la mesure de ladite deuxième phase et ladite deuxième mesure précédente concernant le signal émis par un même satellite du deuxième système mondial de navigation par satellite, l'état estimé du filtre de Kalman étendu est corrigé en fonction de la différence entre ladite mesure de la deuxième phase et ladite deuxième mesure précédente.

L'étape de correction tire ainsi parti des séquences où des données satellites de l'un ou l'autre des systèmes mondiaux de navigation par satellite sont disponibles en continu, ce qui améliore encore la précision.

Dans certains modes de réalisation, le procédé comprend en outre la transmission de la trajectoire déterminée.

Dans certains modes de réalisation, le procédé comprend en outre l'affichage de la trajectoire déterminée.

Le présent exposé concerne également un programme comportant des instructions pour l'exécution du procédé de détermination décrit ci-dessus lorsque ledit programme est exécuté par un ordinateur.

Dans un mode particulier de réalisation, les différentes étapes du procédé de détermination sont définies par des instructions de programme d'ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le présent exposé concerne également un support d'enregistrement lisible par ordinateur sur lequel est enregistré un programme d'ordinateur comportant des instructions pour l'exécution du procédé de détermination décrit ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (« floppy disk » en anglais) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Comme indiqué ci-dessus, le procédé de détermination selon le présent exposé fournit une estimation très précise de trajectoire en toutes conditions, même lorsque l'objet mobile se déplace à l'intérieur d'un bâtiment, et ce sans recourir à aucune infrastructure spécifique déployée à l'avance ou mesure effectuée à l'avance. La trajectoire déterminée peut donc être utilisée pour effectuer la commande d'un objet mobile.

Le présent exposé concerne ainsi également un procédé de commande d'un objet mobile, le procédé de commande comprenant :

la détermination d'une trajectoire de l'objet mobile à l'aide du procédé de détermination décrit ci-dessus ; et
la commande de l'objet mobile en fonction de la trajectoire ainsi déterminée.

Dans certains modes de réalisation, l'objet mobile est mobile, en partie ou entièrement, à l'intérieur d'un bâtiment.

L'objet mobile peut notamment être un robot, un drone, ou encore un véhicule, éventuellement pour le transport de passagers, en particulier un véhicule automobile.

Le procédé de commande peut être mis en oeuvre par une unité de commande embarquée sur l'objet mobile, ou bien par une unité de commande à distance.

L'unité de calcul mettant en oeuvre le procédé de détermination peut être intégrée dans l'unité de commande.

Le présent exposé concerne également un dispositif de détermination d'une trajectoire d'un objet mobile tel que défini par la revendication 13.

Dans certains modes de réalisation, ladite moyenne est une moyenne arithmétique non pondérée.

Dans certains modes de réalisation, le vecteur vitesse moyenne est une moyenne des vecteurs vitesses instantanée de exactement N états précédents du filtre de Kalman étendu.

Le programme, le support d'enregistrement et le dispositif décrits ci-dessus procurent les mêmes avantages que le procédé de détermination.

Brève description des dessins

Le présent exposé sera bien compris et les avantages évoqués ci-dessus apparaîtront mieux, à la lecture de la description détaillée qui suit de plusieurs modes de réalisations, représentés à titre d'exemples non limitatifs. La description se réfère aux dessins annexés sur lesquels :

- la figure 1 est un schéma fonctionnel d'un dispositif de détermination d'une trajectoire d'un objet mobile ;
- la figure 2 illustre les repères de navigation utilisés dans un procédé de détermination d'une trajectoire d'un objet mobile ;
- la figure 3A est une comparaison entre une trajectoire déterminée lors d'une première expérience avec la trajectoire de référence de la première expérience, et la figure 3B est une version simplifiée de la figure 3A afin de mieux visualiser les deux trajectoires ;
- la figure 4A est une comparaison entre une trajectoire déterminée lors d'une deuxième expérience avec la trajectoire de référence de la deuxième expérience, et la figure 4B est une version simplifiée de la figure 4A afin de mieux visualiser les deux trajectoires.

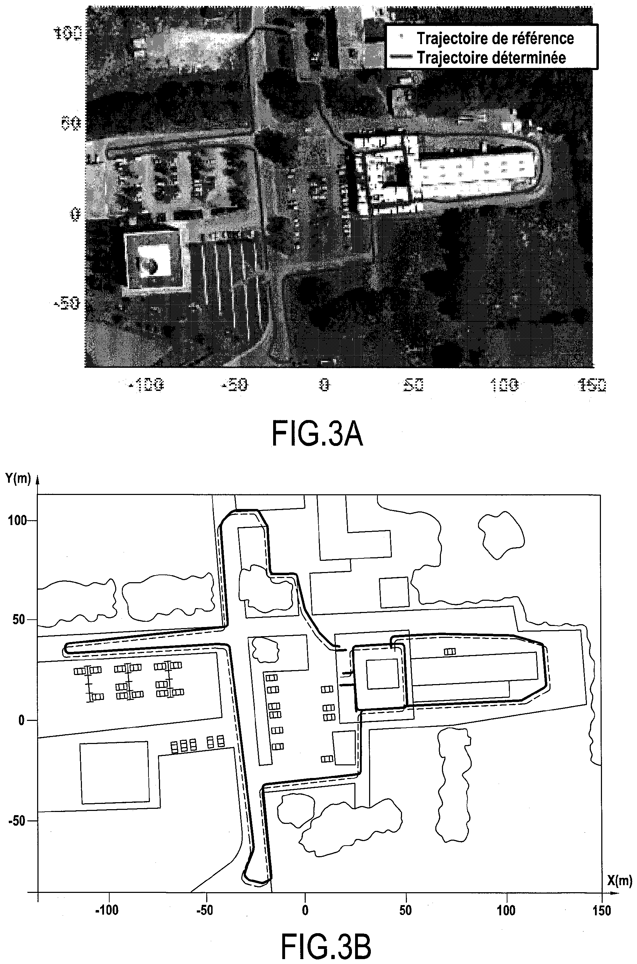

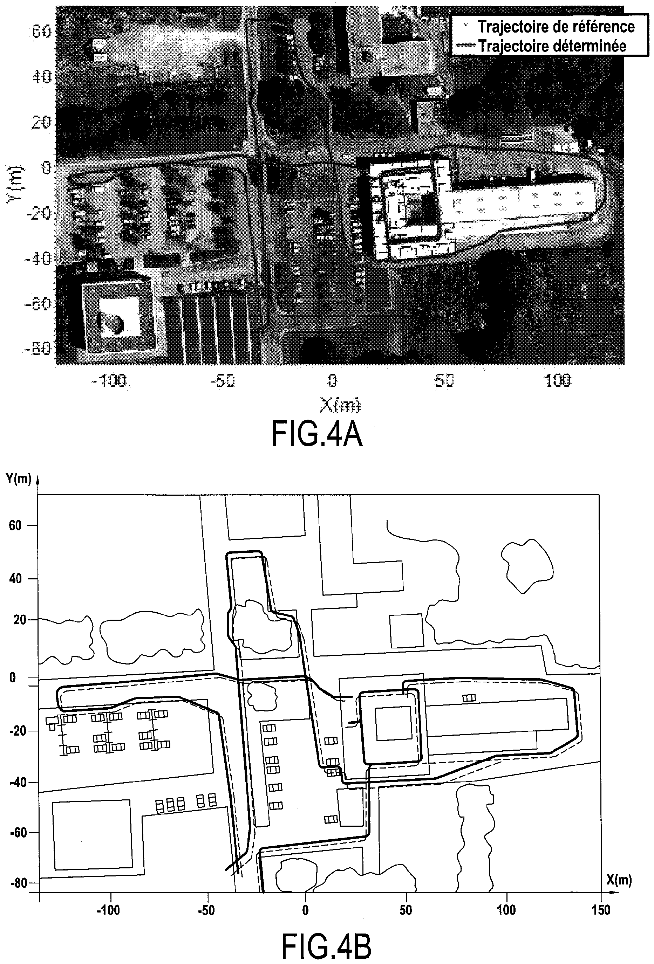

Sur les figures 3B et 4B, la trajectoire déterminée est représentée en pointillés, et la trajectoire de référence est représentée en gras.

Description détaillée de l'invention

Dispositif de détermination

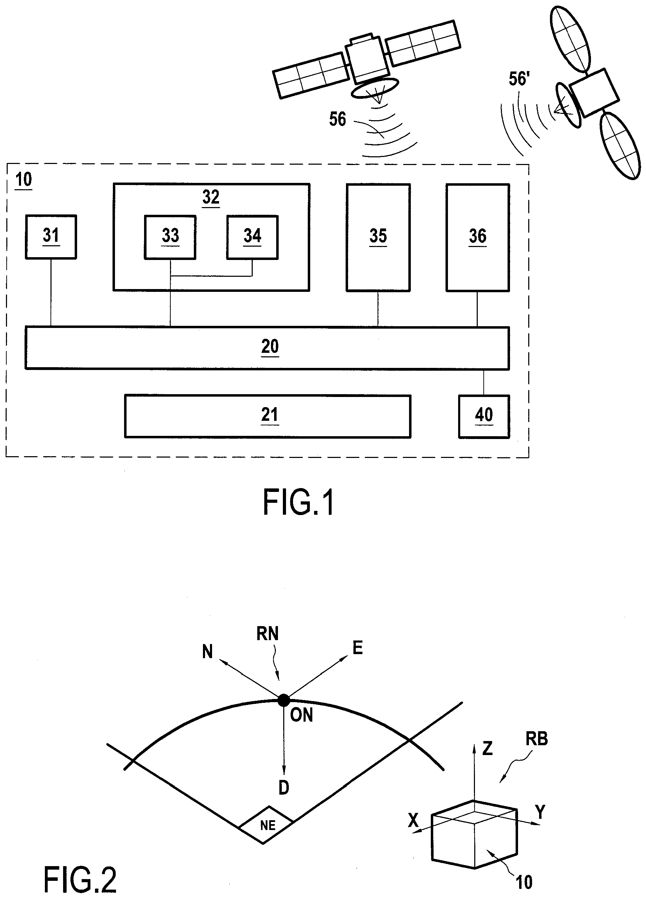

La figure 1 présente un schéma fonctionnel d'un dispositif de détermination d'une trajectoire d'un objet mobile (ci-après « le dispositif ») 10.

Le dispositif 10 peut être prévu pour être fixé à l'objet mobile, par exemple par l'intermédiaire d'un support (non représenté).

Dans un exemple, l'objet mobile est un piéton : le dispositif 10 peut alors être fixé, par exemple, à un pied du piéton. Dans un autre exemple, l'objet mobile est un véhicule automobile : le dispositif 10 peut alors être fixé, par exemple, au pare-brise du véhicule automobile. Dans encore d'autres exemples, l'objet mobile est un robot, un drone, ou encore un véhicule, éventuellement pour le transport de passagers. Il est toutefois précisé que le présent exposé ne se limite pas à ces exemples, ce qui va suivre pouvant être appliqué à n'importe quel objet mobile. En outre, l'objet mobile peut être mobile, en partie ou entièrement, à l'intérieur d'un bâtiment.

Le dispositif 10 comprend une unité de calcul. L'unité de calcul comprend notamment une carte mère 20 et une mémoire 31. La carte mère 20 comprend notamment, comme cela est bien connu, un processeur (CPU pour « Central Processing Unit » en anglais) et une mémoire vive (RAM pour « Random Access Memory » en anglais). La mémoire 31 est configurée pour stocker un ou plusieurs programmes et/ou des résultats de calculs effectués par le processeur. La mémoire 31 peut être, par exemple, une mémoire flash.

L'unité de calcul est configurée pour mettre en oeuvre une estimation d'un état de position de l'objet mobile à l'aide d'un EKF comme cela sera détaillé plus loin.

Le dispositif 10 comprend une centrale inertielle 32 (IMU pour « Inertial Measurement Unit » en anglais) comprenant un accéléromètre 33 et un gyromètre 34.

L'accéléromètre 33 est configuré pour mesurer un vecteur accélération. Le vecteur accélération est en général un vecteur à trois composantes.

Le gyromètre 34 est configuré pour mesurer un vecteur vitesse angulaire. Le vecteur vitesse angulaire est en général un vecteur à trois composantes, qui peut être exprimé sous la forme d'un quaternion afin de faciliter les calculs ultérieurs.

Le dispositif 10 comprend un magnétomètre 35. Le magnétomètre 35 est configuré pour mesurer un vecteur champ magnétique local. Le vecteur champ magnétique local est en général un vecteur à trois composantes.

Le dispositif 10 comprend un récepteur satellitaire (ci-après « récepteur GNSS ») 36.

« GNSS » est un acronyme anglais signifiant « Global Navigation Satellite System », c'est-à-dire système mondial de navigation par satellite. Le terme « GNSS » englobe ainsi tous les systèmes de positionnement par satellite qui permettent à un utilisateur de connaître sa position, sa vitesse et l'heure à l'aide d'un récepteur recevant un signal radio émis par des satellites, et notamment les systèmes GPS (Global Positioning System), GLONASS et Galileo.

Le récepteur GNSS 36 est ainsi configuré pour recevoir et traiter un signal 56 émis par un premier GNSS, et fournir en sortie une ou plusieurs grandeurs représentatives du signal 56.

Notamment, le récepteur GNSS 36 est configuré pour mesurer et fournir en sortie une phase du signal 56. En effet, comme cela est bien connu, les GNSS émettent un ou plusieurs signaux sous forme d'une onde électromagnétique sinusoïdale de fréquence fixe et connue. La phase du signal 56 reçu par le récepteur GNSS 36 peut donc apporter une information sur la vitesse du récepteur comme cela sera détaillé plus loin.

Dans certains modes de réalisation, le récepteur GNSS 36 est configuré pour recevoir et traiter des signaux émis par plusieurs GNSS. Dans ce cas, le récepteur GNSS est configuré pour mesurer et fournir en sortie une phase d'un signal 56' émis par un deuxième GNSS distinct du premier GNSS.

Dans un exemple, le premier GNSS est le système GPS et le deuxième GNSS est le système GLONASS.

Le dispositif peut comprendre une unité de transmission 40 configurée pour transmettre des données à un système extérieur. L'unité de transmission 40 peut comprendre une carte Ethernet, un connecteur USB, une carte WiFi, ou une combinaison de ces éléments.

Le dispositif 10 comprend une alimentation électrique 21 pour alimenter en électricité les composants décrits ci-dessus. L'alimentation électrique 21 peut comprendre une batterie et/ou un connecteur configuré pour être raccordé à une source extérieure d'électricité (non représentée).

Repères

On va maintenant décrire à l'aide de la figure 2 les repères dans lesquels les mesures effectuées par le dispositif 10, qui sont pour la plupart exprimées sous la forme de vecteurs à plusieurs composantes, sont exprimées.

Un premier repère RN (parfois appelé « repère de navigation ») est un repère cartésien fixe par rapport à la Terre. Une origine ON étant choisie à la surface de la Terre, on considère le plan NE qui est tangent à la surface de la Terre et contient l'origine ON. Dans le plan NE, on choisit l'axe N (dirigé vers le Nord géographique) et l'axe E (dirigé vers l'Est) comme les deux premiers axes du repère RN. Le troisième axe D est orienté selon la verticale de l'origine ON et vers le bas, de sorte que le trièdre NED soit orthogonal et direct. Le repère RN est donc de type « North East Down ».

Un deuxième repère RB est un repère cartésien fixé au dispositif 10. Il est donc mobile dans le repère RN. Les axes X, Y, Z du repère RB sont choisis de telle sorte que le repère RB soit orthonormé et direct.

Dans la suite, les valeurs exprimées dans le repère RN seront notées sous la forme $Y^n$, et les valeurs exprimées dans le repère RB seront notées sous la forme $Y^b$. La matrice de passage du repère RB vers le repère RN est notée $C_b^n$.

Un troisième repère (non représenté pour ne pas compliquer la figure 2), dit repère ECEF (pour « Earth Centered Earth Fixed » en anglais), est un repère cartésien fixe par rapport à la Terre. L'origine du repère ECEF correspond au centre des masses de la Terre. L'axe Z du repère est orienté vers le pôle Nord et l'axe X pointe en direction du méridien de Greenwich, dans le plan de l'équateur. L'axe Y est placé de sorte que le trièdre XYZ est orthogonal et direct. Le repère ECEF est en général utilisé pour les données GNSS.

Dans la suite, les valeurs exprimées dans le repère ECEF seront notées sous la forme Y$^{ecef}$. La matrice de passage du repère ECEF vers le repère RN est notée $\mathbf{R}_n^{ecef}$.

Fonctionnement du dispositif de détermination

On va maintenant détailler le fonctionnement du dispositif 10.

L'accéléromètre 33 et le gyromètre 34 mesurent respectivement un vecteur accélération et un vecteur vitesse angulaire du dispositif 10, à une fréquence fixe $f_{IMU}$. Cette fréquence est typiquement élevée, de l'ordre de 100 Hz, et par exemple égale à 160 Hz.

Le magnétomètre 35 mesure un vecteur champ magnétique local au niveau du dispositif 10, à une fréquence fixe. Cette fréquence est typiquement élevée et de préférence égale à $f_{IMU}$ afin de faciliter la mise en oeuvre de l'estimation de l'état de position.

Le récepteur GNSS 36 reçoit et traite le signal 56 (et éventuellement le signal 56'). Comme évoqué ci-dessus, ces signaux peuvent ne pas être toujours reçus, notamment en intérieur. En outre, la fréquence temporelle d'émission est comparativement basse. En conséquence, le récepteur GNSS mesure la phase du signal 56 (et éventuellement du signal 56') à une fréquence fixe $F_{GNSS}$, Cette fréquence est plus faible que $f_{IMU}$, de l'ordre de 1 Hz, et par exemple égale à 5 Hz.

Comme évoqué ci-dessus, l'unité de calcul est configurée pour mettre en oeuvre une détermination d'un état de position de l'objet mobile à l'aide d'un EKF. Cette détermination est réalisée par exemple au cours de l'exécution, par le processeur, d'un programme stocké dans la mémoire 31.

La détermination mise en oeuvre par l'unité de calcul comprend une étape d'estimation et une étape de correction.

L'étape d'estimation consiste en une détermination initiale, éventuellement provisoire, de l'état de l'EKF. Concrètement, l'unité de calcul calcule un état estimé de l'EKF à l'instant k à partir de l'état de l'EKF à l'instant k-1 en utilisant l'équation d'état (1) de l'EKF.

L'état estimé de l'EKF est ensuite soumis à l'étape de correction. Concrètement, l'unité de calcul vérifie si au moins l'une des mesures fournies par l'IMU 32, le magnétomètre 35 et le récepteur GNSS 36 sont disponibles. Si aucune mesure n'est disponible, l'unité de calcul n'acquiert aucune mesure et n'effectue aucune correction à l'instant k. À l'inverse, si au moins une mesure est disponible, l'unité de calcul l'acquiert et effectue par le calcul une correction de l'état estimé de l'EKF à l'instant k, en fonction d'au moins une des mesures disponibles.

L'étape d'acquisition, l'étape d'estimation et de correction sont effectuées de manière répétée, de manière à obtenir une succession d'états de l'EKF. Chaque répétition correspond à une itération de l'EKF. La trajectoire de l'objet mobile est obtenue en extrayant l'état de position de chacun des états de l'EKF. L'unité de calcul itère l'état de l'EKF à une fréquence du même ordre de grandeur que, et de préférence égale à, la fréquence $f_{IMU}$. L'estimation tire ainsi parti de la fréquence d'acquisition élevée de l'IMU 32.

L'état $X$ de l'EKF mis en oeuvre par l'unité de calcul comprend un vecteur vitesse instantanée v et un vecteur vitesse moyenne $\bar{v}$ du dispositif 10. Le vecteur vitesse moyenne $\bar{v}$ est obtenu en effectuant une moyenne des vecteurs vitesse instantanée **v** de au moins N états précédents de l'EKF, où :

$$N = \frac{f_{IMU}}{f_{GNSS}}$$

L'état $X$ de l'EKF comprend en outre un décalage entre l'horloge du récepteur satellitaire 36 et le temps du système mondial de navigation par satellite.

Durant l'étape de correction, lorsqu'une mesure de la phase du signal 56 et une mesure précédente de ladite phase sont disponibles, ladite mesure précédente correspondant à l'un desdits au moins N états précédents du filtre de Kalman étendu, et la mesure de ladite phase et ladite mesure précédente concernent le signal 56 émis par un même satellite du système mondial de navigation par satellite, l'état estimé du filtre de Kalman étendu est corrigé en fonction de la différence entre ladite mesure et ladite mesure précédente.

Les inventeurs ont constaté que, de cette manière, l'erreur est significativement plus faible qu'avec les procédés de l'art antérieur, comme cela sera détaillé plus loin, et ce en particulier lors d'une utilisation dite « indoors ».

Dans un mode de réalisation préféré, la moyenne est une moyenne arithmétique non pondérée.

Dans un mode de réalisation préféré, moyenne $\bar{v}$ est obtenu en effectuant une moyenne des vecteurs vitesse instantanée **v** de exactement N états précédents de l'EKF. On notera que dans ce cas, la condition ci-dessus relative à la phase du signal 56 est équivalente à la condition que deux mesures consécutives de la phase du signal 56 émis par un même satellite du GNSS soient disponibles. En effet, N étant défini par l'équation $N = \frac{f_{IMU}}{f_{GNSS}}$, au plus deux mesures de la phase peuvent être disponibles pour les N états précédents de l'EKF.

Dans l'exemple présenté ci-dessus, l'unité de calcul est installée dans un boîtier commun avec l'accéléromètre 33, du gyromètre 34, du magnétomètre 35 et le récepteur GNSS 36, et l'unité de calcul acquiert directement les mesures réalisées par ces capteurs, par exemple via une interface réseau connue.

En alternative, l'unité de calcul peut être extérieure à ce boîtier. Les mesures peuvent alors être stockées dans la mémoire 31 afin d'être post-traitées par l'unité de calcul, ou encore être transmises à l'unité de calcul via l'unité de transmission 40.

La trajectoire de l'objet mobile déterminée comme décrit ci-dessus peut être transmise à un système extérieur, tel qu'un serveur informatique, par exemple via l'unité de transmission 40.

En complément ou en alternative, la trajectoire de l'objet mobile déterminée comme décrit ci-dessus peut être affichée, par exemple affichée sur un écran d'affichage visible par un utilisateur. Plus particulièrement, la trajectoire peut être affichée sur un écran d'affichage (non représenté) visible pour l'utilisateur du dispositif 10. L'écran d'affichage peut ou non être intégré au dispositif 10.

Exemple d'EKF

On présente ci-dessous, à titre d'exemple non-limitatif, un EKF permettant de mettre en oeuvre une détermination d'un état de position de l'objet mobile décrite ci-dessus.

*Vecteur d'état retenu*

L'état X de l'EKF choisi dans le présent exemple comprend :

- le quaternion des angles d'attitude $\mathbf{q}_b^n$, qui représente le vecteur d'attitude ;
- le biais du quaternion $\mathbf{b}_q$, qui représente le biais du vecteur d'attitude ;
- le biais de l'accéléromètre $\mathbf{b}_{acc}$ ;
- le vecteur position $\mathbf{P}$ ;
- le vecteur vitesse instantanée $\mathbf{v}$ ;
- le vecteur vitesse moyenne $\bar{\mathbf{v}}$ ;

- la différence temporelle du décalage d'horloge du récepteur GNSS par rapport au temps GPS $c\delta_{GPS} \frac{\Delta dT^T}{\Delta t}$ ;

- la différence temporelle du décalage d'horloge du récepteur GNSS par rapport au temps GLONASS $c\delta_{GLO} \frac{\Delta dT^T}{\Delta t}$ .

C'est-à-dire :

$$X = \left[ \delta\mathbf{q}_b^{n\,T}, \delta\mathbf{b}_{q_\omega}^{b\,T}, \delta\mathbf{b}_{acc}^{b\,T}, \delta\mathbf{P}^{n\,T}, \delta\mathbf{v}^{n\,T}, \delta\bar{\mathbf{v}}^{n\,T}, c\delta_{GPS} \frac{\Delta dT^T}{\Delta t}, c\delta_{GLO} \frac{\Delta dT^T}{\Delta t} \right]^T$$

Le vecteur d'état $X$ comprend ainsi un état de position de l'objet mobile, en l'espèce son vecteur position $\mathbf{P}$ et son vecteur vitesse instantanée v, exprimés dans le repère RN, et le vecteur vitesse moyenne $\bar{\mathbf{v}}$, lui aussi exprimé dans le repère RN.

Dans la suite :

- le symbole « ^ » au-dessus d'une variable signifie qu'il s'agit d'une valeur estimée ;
- le symbole « - » en exposant d'une variable signifie qu'il s'agit d'une valeur prédite ;
- le symbole « + » en exposant d'une variable signifie qu'il s'agit d'une valeur mise à jour.

*Mesures*

L'accéléromètre 33 est supposé fournir une mesure $y_a$ de la forme :

$$\boldsymbol{y}_a = \mathbf{f}^b + \mathbf{b}_a^b + \eta_a = a^b - g^b + \mathbf{b}_a^b + \eta_a$$

où $a^b$ désigne le vecteur accélération, $g^b$ l'accélération de la pesanteur, $\boldsymbol{b}_a^b$ désigne le biais de l'accéléromètre et $\eta_a$ désigne un bruit blanc gaussien.

Le gyromètre 34 est supposé fournir une mesure $\mathbf{y}_g$ de la forme :

$$\mathbf{y}_g = \boldsymbol{\omega}^b + \mathbf{b}_\omega^b + \eta_\omega$$

où $\omega^b$ désigne le vecteur vitesse angulaire, $\mathbf{b}_\omega^b$ désigne le biais du gyromètre et $\eta_\omega$ désigne un bruit blanc gaussien.

Le magnétomètre 35 est supposé fournir une mesure $y_m$ de la forme :

$$\mathbf{y}_m = \mathbf{SM}(\mathbf{A}_{si}\mathbf{B}^b + \mathbf{b}_{hi}^b) + \mathbf{b}_{so}^b + \eta_m$$

où $\mathbf{B}^b$ désigne le vecteur champ magnétique local, $\mathbf{S}$ est un facteur d'échelle, $\mathbf{M}$ est une matrice de correction de la non-orthogonalité des axes, $\mathbf{b}_{hi}^b$ est le biais introduit par l'effet dit « Hard Iron » en anglais (déviation magnétique dite de fer dur), $\mathbf{A}_{si}$ est une matrice permettant de tenir compte de l'effet dit « Soft Iron » en anglais (qui correspond à une variation magnétique dite de fer mou), $\mathbf{b}_{so}^b$ est le biais du magnétomètre proprement dit (occasionnellement noté $\mathbf{b}^b$ dans la suite), et $\eta_m$ un bruit blanc gaussien.

Les mesures $\boldsymbol{y}_a$, $\boldsymbol{y}_g$ et $\mathbf{y}_m$ sont supposées être acquises à une fréquence d'acquisition $f_{IMU} > f_{GNSS}$, par exemple égale à 160 Hz.

Le récepteur GNSS 36 est supposé pouvoir mesurer la phase $\phi_i$ d'un signal GPS et/ou d'un signal GLONASS.

La mesure de la phase $\phi_i$ est supposée être acquise à une fréquence d'acquisition $f_{GNSS}$ relativement faible, par exemple égale à 5 Hz.

On peut montrer que la distance géométrique pf entre le récepteur GNSS *i* et le satellite GNSS *k* est liée au déphasage $\phi_i^k$ entre le signal reçu par le récepteur GNSS i et le signal émis par le satellite GNSS k par la relation :

$$\lambda.\phi_i^k = \rho_i^k + c(dt^k - dT_i) - \lambda.N_i^k - \Delta\rho^{iono,k} + \Delta\rho^{tropo,k}$$

où :

- $\lambda$ désigne la longueur d'onde du signal ;
- $dt^k$ désigne le décalage d'horloge du satellite ;
- $dt_i$ désigne le décalage d'horloge du récepteur ;
- $\Delta\rho^{iono,k}$ désigne le décalage dû à l'ionosphère ;
- $\Delta\rho^{tropo,k}$ désigne le décalage dû à la troposphère ;
- c désigne la célérité de la lumière dans le vide ;
- $N_i^k$ désigne l'ambiguïté entière (nombre entier de cycles entre le signal reçu par le récepteur GNSS *i* et le signal émis par le satellite *k*).

Lorsque deux mesures consécutives $\phi_{i,k}$, $\phi_{i,k-1}$ de la phase $\phi_i$ du signal émis par un même satellite GNSS sont disponibles à deux instants k et k-1, on peut calculer une différence temporelle de phase du satellite *i* entre les instants k et k-1 :

$$\lambda.\frac{\Delta\phi_{i,k}}{\Delta t} = \lambda.\frac{\phi_{i,k} - \phi_{i,k-1}}{t_k - t_{k-1}}$$

En utilisant l'équation liant la distance géométrique à la mesure de déphasage, on obtient :

$$\lambda.\frac{\Delta\phi_{i,k}}{\Delta t}$$
$$= \frac{(\Delta\rho_{R_k}^{S_{i,k}} + c(\Delta dt^{S_{k,k-1}} - \Delta dT_{R_{k,k-1}}) - \lambda.\Delta N^{k,k-1} + \Delta\rho^{iono,k,k-1} + \Delta\rho^{tropo,k-k-1})}{\Delta t}$$

où :

- $\Delta\rho_{R_k}^{S_{i,k}}$ est la variation de distance géométrique entre le satellite S et le récepteur R entre les instants k et k-1 ;
- $\Delta dt^{S_{k,k-1}}$ est la différence temporelle de décalage d'horloge du satellite entre les instants k et k-1 ;
- $\Delta dT_{R_{k,k-1}}$ est la différence temporelle de décalage d'horloge du récepteur entre les instants k et k-1 ;
- $\Delta N^{k,k-1}$ est la différence d'ambiguïtés entières entre les instants k et k-1 ;
- $\Delta\rho^{iono,k,k-1}$ est la différence de décalage due à l'ionosphère entre les deux instants ;
- $\Delta\rho^{tropo,k-k-1}$ est la différence de décalage due à la troposphère entre les deux instants.

L'intervalle de temps entre les deux mesures consécutives étant très faible, on peut considérer la position du récepteur comme quasiment constante, et donc les variations de décalages atmosphériques, d'ambiguïtés entières et de décalage d'horloge du satellite sont considérées comme négligeables. L'équation devient donc :

$$\lambda.\frac{\Delta\phi_{i,k}}{\Delta t} = \frac{(\Delta\rho_{R_k}^{S_{i,k}} + c\Delta dT_{R_{k,k-1}})}{\Delta t}$$

D'autre part, la variation de distance géométrique $\Delta\rho_{R_k}^{S_{i,k}}$ peut se développer selon l'équation suivante :

$$\Delta\rho_{R_k}^{S_{i,k}} = \Delta\mathbf{S} - \Delta\mathbf{G} - \vec{\mathbf{e}}_{R_k}^{S_k}\Delta\vec{\mathbf{x}}_{R_k}$$

avec $\Delta\mathbf{S} = \vec{\mathbf{e}}_{R_k}^{S_k}.\vec{\mathbf{x}}_{S_k} - \vec{\mathbf{e}}_{R_{k-1}}^{S_{k-1}}.\vec{\mathbf{x}}_{S_{k-1}}$ et $\Delta\mathbf{G} = \vec{\mathbf{e}}_{R_k}^{S_k}.\vec{\mathbf{x}}_{R_k} - \vec{\mathbf{e}}_{R_{k-1}}^{S_{k-1}}.\vec{\mathbf{x}}_{R_{k-1}}$ où :

- $\vec{\mathbf{e}}_{R_k}^{S_k}$ est le vecteur unitaire le long de la ligne de visée :

$$\vec{\mathbf{e}}_{R_k}^{S} = \frac{\vec{\mathbf{x}}_S - \vec{\mathbf{x}}_R}{\|\vec{\mathbf{x}}_S - \vec{\mathbf{x}}_R\|}$$

- $\vec{\mathbf{x}}_{S_k}$ est la position du satellite à l'instant k ;
- $\vec{\mathbf{x}}_{R_k}$ est la position du récepteur à l'instant k.

Finalement, la différence temporelle de phase $\lambda.\frac{\Delta\phi_{i,k}}{\Delta t}$ s'exprime donc en fonction de la vitesse moyenne $\vec{v}moy_R$ entre les instants k et k-1 du récepteur selon la relation :

$$\lambda . \frac{\Delta \phi_{i,k}}{\Delta t} = \frac{\Delta \mathbf{S} - \Delta \mathbf{G} + c\Delta dT}{dt} - \vec{\mathbf{e}}_{R_k}^{S_k} . \vec{\mathbf{v}}_{moy_R}$$

*Lois d'évolution*

Le quaternion des angles d'attitude évolue selon la loi suivante : $\widehat{\mathbf{q}}_b^n(t+dt) = \widehat{\mathbf{q}}_b^n(t) \cdot \widehat{\mathbf{q}}_\omega(t)$ où $\widehat{\mathbf{q}}_\omega(t)$ est la rotation estimée entre les instants t et t+dt exprimé dans le repère RB.

On peut montrer que :

$$\delta\widehat{\mathbf{q}}_b^n(t+dt) = -\widehat{\mathbf{q}}_n^b(t).\delta b_{q_\omega} - \widehat{\mathbf{q}}_n^b(t).\eta + \delta\mathbf{q}_n^b(t)\widehat{\mathbf{q}}_\omega(t) - \delta\mathbf{q}_n^b(t).\delta\mathbf{b}_{q_\omega}(t) - \delta\mathbf{q}_n^b(t).\eta$$

D'où, en négligeant les termes de second ordre :

$$\delta\widehat{\mathbf{q}}_b^n(t+dt) = -\widehat{\mathbf{q}}_n^b(t).\delta\mathbf{b}_{q_\omega} + \delta\mathbf{q}_n^b(t).\widehat{\mathbf{q}}_\omega(t) - \widehat{\mathbf{q}}_n^b(t)\eta - \delta\mathbf{q}_n^b(t).\eta$$

$$\delta\widehat{\mathbf{q}}_b^n(t+dt) = -\mathbf{M}\big(\widehat{\mathbf{q}}_b^n(t)\big).\delta\mathbf{b}_{q_\omega} - \mathbf{M}\big(\widehat{\mathbf{q}}_b^n(t)\big)\eta + \mathbf{C}\big(\widehat{\mathbf{q}}(t)\big)\delta\mathbf{q}_n^b(t)$$

où

$$\mathbf{M}(\mathbf{q}) = \begin{bmatrix} q1 & -\vec{\mathbf{q}}^T \\ \vec{\mathbf{q}} & (q1.\mathbf{I} + [\vec{\mathbf{q}}\times]) \end{bmatrix} \text{ et } (\mathbf{q}) = \begin{bmatrix} q1 & -\vec{\mathbf{q}}^T \\ \vec{\mathbf{q}} & (q1.\mathbf{I} - [\vec{\mathbf{q}}\times]) \end{bmatrix}$$

avec

$$\mathbf{q} = \begin{pmatrix} q1 \\ \vec{\mathbf{q}} \end{pmatrix}.$$

Le biais du quaternion est supposé évoluer selon un processus de Gauss-Markov du premier ordre :

$$\mathbf{b}_{q_\omega}^b(t+dt) = exp\left(\frac{-1}{\tau}\right)\mathbf{b}_{q_\omega}^b(t) + \eta_{b_{q_\omega}}$$

Le biais de l'accéléromètre est supposé évoluer selon une marche aléatoire :

$$\mathbf{b}_{acc}^b(t+dt) = \mathbf{b}_{acc}^b(t) + \eta_{b_{acc}}$$

où $\eta_{b_{acc}}$ représente le bruit blanc du biais d'accélération.

D'après les équations de Newton, la position et la vitesse évoluent comme suit :

$$\delta\widehat{\mathbf{v}}^n(t+dt) = \delta\widehat{\mathbf{v}}^n(t) + \delta a^n(t)dt$$

$$\delta\widehat{\mathbf{p}}^n(t+dt) = \delta\widehat{\mathbf{p}}^n(t) + \delta\mathbf{v}^n(t)dt + \frac{1}{2}\delta\mathbf{a}^n(t)dt^2$$

Le vecteur vitesse moyenne $\bar{\mathbf{v}}$ est calculé comme une moyenne arithmétique non pondérée des vecteurs vitesse instantanées v des N états précédents de l'EKF, c'est-à-dire :

$$\bar{\mathbf{v}}_{(t)} = \frac{1}{N} \times \sum_{k=t-N+1}^{t} (\mathbf{v}_k)$$

où :

$$N = \frac{f_{IMU}}{f_{GNSS}}$$

On en déduit la vitesse moyenne à l'instant suivant :

$$\bar{\mathbf{v}}_{(t+dt)} = \frac{1}{N} \times \sum_{k=t-N+2}^{t+dt} (\mathbf{v}_k)$$
$$= \bar{\mathbf{v}}_{(t)} + \frac{1}{N}\bar{\mathbf{v}}_{(t+dt)} - \frac{1}{N}\mathbf{v}_{(t-N+1)}$$
$$= \bar{\mathbf{v}}_{(t)} + \frac{1}{N}\big(\bar{\mathbf{v}}_{(t)} + \mathbf{a}_{(t)}dt\big) - \frac{1}{N}\mathbf{v}_{(t-N+1)}$$

Au voisinage du vecteur d'erreur, on a :

$$\delta\delta\bar{\mathbf{v}}_{(t+dt)} = \delta\bar{\mathbf{v}}_{(t)} + \frac{1}{N}\delta\hat{\mathbf{v}}_{(t)} + \frac{1}{N}\delta\mathbf{a}_{(t)}dt - \frac{1}{N}\delta\mathbf{v}_{(t-N+1)}$$

avec :

$$\partial\mathbf{a}_{(t)}^n = \big[\hat{\mathbf{q}}_b^n\big(y^b - \hat{\mathbf{b}}_a^b\big)\partial\bar{\mathbf{q}}_b^n + \mathbf{q}_b^n\big(\mathbf{y}^b - \hat{\mathbf{b}}_a^b\big)\overline{\mathbf{q}_b^n}\big] - \hat{\mathbf{q}}_b^n \cdot \partial b_a^b \cdot \overline{\mathbf{q}_b^n} + \hat{\mathbf{q}}_b^n \cdot n_a^b \cdot \overline{\mathbf{q}_b^n}$$

Les différences temporelles du décalage d'horloge sont supposées évoluer selon une marche aléatoire :

$$c\delta\frac{\Delta dT}{\Delta t}(t+dt) = c\delta\frac{\Delta dT}{\Delta t}(t) + \eta$$

(relation valable pour le temps GPS et le temps GLONASS).

*Matrice de transition entre deux états*

La matrice de transition entre deux états est la matrice F telle que :

$$\widehat{\mathbf{X}}_k^- = \mathbf{F}.\widehat{\mathbf{X}}_{k-1}^+ + W_{k-1}$$

En rassemblant les lois d'évolution ci-dessus, la matrice de transition entre deux états $\mathbf{F}_{t,t+dt}$ s'écrit de la façon suivante :

$$\mathbf{F}_{t,t+dt} = \begin{bmatrix} C(\widehat{\mathbf{q}}_\omega) & -\mathbf{M}(\widehat{\mathbf{q}}_b^n) & 0 & 0 & 0 & 0 & 0 & 0 \\ 0 & \dfrac{-1}{\tau} & 0 & 0 & 0 & 0 & 0 & 0 \\ 0 & 0 & I & 0 & 0 & 0 & 0 & 0 \\ h1(\widehat{\mathbf{q}}_b^n, f_{ib}^b)\dfrac{dt^2}{2} & 0 & \dfrac{-dt^2}{2}\mathbf{C}_b^n & I & dtI & 0 & 0 & 0 \\ h1(\widehat{\mathbf{q}}_b^n, f_{ib}^b)dt & 0 & -dt\mathbf{C}_b^n & 0 & I & 0 & 0 & 0 \\ h1(\widehat{\mathbf{q}}_b^n, f_{ib}^b)dt \times \dfrac{1}{N} & 0 & -dt \times \dfrac{1}{N}\mathbf{C}_b^n & 0 & \dfrac{I}{N} & I & 0 & 0 \\ 0 & 0 & 0 & 0 & 0 & 0 & I & 0 \\ 0 & 0 & I & 0 & 0 & 0 & 0 & I \end{bmatrix}$$

où :

$$h1(q, x) = 2\left[\mathbf{q}_1 x + [\mathbf{u}_q \times]x\langle\mathbf{u}_q, x\rangle I_{3\times3} - [\mathbf{q}_{1x} + [\mathbf{u}_q \times]x]\right]$$

avec $\mathbf{q} = \begin{pmatrix} q_1 \\ \mathbf{u}_q \end{pmatrix}$ et étant rappelé que la matrice de transformation du repère RB vers le repère RN est notée $\mathbf{C}_b^n$ .

Grâce à la matrice de transition entre deux états $\mathbf{F}_{t,t+dt}$, le vecteur d'état à l'instant k, $\widehat{\mathbf{X}}_k^-$ , est évalué par le calcul à partir des équations ci-dessus et du vecteur d'état à l'instant k-1, $\widehat{\mathbf{X}}_{k-1}^+$ . Ainsi, la matrice de transition $\mathbf{F}_{t,t+dt}$ permet d'obtenir, par le calcul, un état de position estimé à partir de l'état de position estimé précédent, comme expliqué précédemment.

*Corrections*

Comme indiqué précédemment, l'état estimé de l'EKF est corrigé lorsqu'une mesure est disponible. Comme cela sera détaillé ci-dessous, plusieurs corrections sont envisagées ici, chaque correction étant exécutée à différentes conditions. On notera que plusieurs des corrections ci-dessous peuvent être exécutées sur la même itération de l'EKF, pourvu que les conditions de chacune de ces corrections soient remplies.

*Première correction*

La première correction est appliquée lorsque deux mesures consécutives de la phase $\phi_i$ du signal émis par un même satellite du système mondial de navigation par satellite sont disponibles. Il s'agit donc d'une correction du type TDCP pour « Time-Differenced Carrier-Phase ».

Comme indiqué précédemment, lorsque des données GNSS sont disponibles pour un satellite à l'instant t et t-1, la différence temporelle de phase peut être estimée selon l'équation suivante :

$$\lambda.\frac{\Delta\widehat{\phi}_{i,k}}{\Delta t} = \frac{\Delta\mathbf{S} - \Delta\mathbf{G} + c\Delta\widehat{dT}}{dt} - \vec{\mathbf{e}}_{R_k}^{S_k}.\widehat{\mathbf{v}}_{moy_R}$$

où :

- $\lambda.\dfrac{\Delta\widehat{\phi}_{i,k}}{\Delta t}$ est la différence temporelle de phase estimée ;

- $\dfrac{c\Delta\widehat{dT}}{dt}$ est la différence temporelle de l'erreur d'horloge du récepteur ;

- $\widehat{\mathbf{v}}_{moy_R}$ la vitesse moyenne estimée.

L'innovation correspond à la différence entre la différence temporelle de phase déterminée à partir des mesures de la phase et la différence temporelle de phase estimée :

$$\mathbf{ino}_{TDCP} = \lambda . \frac{\Delta\phi_{i,k}}{\Delta t} - \lambda . \frac{\Delta\widehat{\phi}_{i,k}}{\Delta t}$$

$$\mathbf{ino}_{TDCP} = \frac{\Delta\mathbf{S} - \Delta\mathbf{G} + c\Delta dT}{dt} - \vec{\mathbf{e}}_{R_k}^{S_k}.\mathbf{v}_{moy_R} - \frac{\Delta\mathbf{S} - \Delta\mathbf{G} + c\widehat{\Delta dT}}{dt} - \vec{\mathbf{e}}_{R_k}^{S_k}.\widehat{\mathbf{v}}_{moy_R}$$

$$\mathbf{ino}_{TDCP} = \delta\frac{c\Delta dT}{dt} - \vec{\mathbf{e}}_{R_k}^{S_k}.\delta\mathbf{v}_{moy}^{ecef}$$

La vitesse moyenne $\delta\mathbf{v}_{moy}^{ecef}$ est ici exprimée dans le repère ECEF correspondant aux données satellites.

Elle est transformée dans le repère de navigation RN grâce à la matrice de passage $\mathbf{R}_n^{ecef}$ :

$$\mathbf{ino}_{TDCP} = c\delta\frac{\Delta dT}{dt} + \vec{\mathbf{e}}_{R_k}^{S_k}.\mathbf{R}_n^{ecef}.\delta\mathbf{v}_{moy}^n$$

Avec

$$\mathbf{R}_n^{ecef} = \begin{bmatrix} -sin\lambda & -cos\lambda sin\varphi & cos\lambda cos\varphi \\ cos\lambda & -sin\lambda sin\varphi & sin\lambda cos\varphi \\ 0 & cos\varphi & sin\varphi \end{bmatrix}$$

où $\lambda$ est la longitude et $\varphi$ est la latitude du point origine du repère de navigation RN.

En exprimant l'innovation en fonction du vecteur d'état, l'équation devient :

$$\mathbf{ino}_{TDCP} = -\mathbf{I}_{n\times1}.\delta\frac{c\Delta dT}{dt}$$

$$+ \begin{bmatrix} \vec{\mathbf{e}}_{R_k\,x}^{S_{1,k}} & \vec{\mathbf{e}}_{R_k\,y}^{S_{1,k}} & \vec{\mathbf{e}}_{R_k\,z}^{S_{1,k}} \\ \vdots & \vdots & \vdots \\ \vec{\mathbf{e}}_{R_k\,x}^{S_{n,k}} & \vec{\mathbf{e}}_{R_k\,y}^{S_{n,k}} & \vec{\mathbf{e}}_{R_k\,z}^{S_{n,k}} \end{bmatrix}.\mathbf{R}_n^{ecef}.(0_{1\times5} \quad 1 \quad 0_{1\times2}). \begin{bmatrix} \delta\mathbf{q}_b^{n\,T} \\ \delta\mathbf{b}_{q_\omega}^{b\,T} \\ \delta\mathbf{b}_{acc}^{b\,T} \\ \delta\mathbf{P}^{n\,T} \\ \delta\mathbf{v}^{n\,T} \\ \delta\bar{\mathbf{v}}^{n\,T} \\ c\delta_{GPS}\frac{\Delta dT}{\Delta t}^T \\ c\delta_{GLO}\frac{\Delta dT}{\Delta t}^T \end{bmatrix}$$

où $\delta\frac{c\Delta dT}{dt}$ est la différence temporelle du récepteur par rapport au temps GPS ou au temps GLONASS selon l'origine des données utilisées.

On en déduit la matrice H telle que $\mathbf{ino}_{TDCP}$ = **H.X** :

$$\mathbf{H} = \left[ \begin{bmatrix} \vec{\mathbf{e}}^{S_{1,k}}_{R_k\,x} & \vec{\mathbf{e}}^{S_{1,k}}_{R_k\,y} & \vec{\mathbf{e}}^{S_{1,k}}_{R_k\,z} \\ \vdots & \vdots & \vdots \\ \vec{\mathbf{e}}^{S_{n,k}}_{R_k\,x} & \vec{\mathbf{e}}^{S_{n,k}}_{R_k\,y} & \vec{\mathbf{e}}^{S_{n,k}}_{R_k\,z} \end{bmatrix} . \mathbf{R}^{ecef}_n . (0 \quad 0 \quad 0 \quad 0 \quad 0 \quad 1 \quad 0 \quad 0) \quad -I^{GPS}_{n\times 1} \quad -I^{GLO}_{n\times 1} \right]$$

où $I^{GPS}$ est remplacé par 0 lorsque les données sont issues de satellites GLONASS et $I^{GLO}$ est remplacé par 0 lorsque les données sont issues de satellites GPS.

Ainsi, pendant la première correction, l'état estimé de l'EKF est corrigé en fonction de la différence entre les deux mesures consécutives de la phase $\phi_i$.

Les deuxième, troisième et quatrième corrections présentées ci-dessous sont préférables afin d'affiner l'estimation de la trajectoire. De préférence, toutes les corrections présentées ci-dessous sont mises en oeuvre. Il est toutefois possible de ne mettre en oeuvre qu'une ou plusieurs parmi ces corrections, selon les circonstances.

*Deuxième correction*

Une deuxième correction est appliquée lorsque la norme du vecteur accélération $a^b$ mesuré est 1) sensiblement égale à la norme de l'accélération de la pesanteur $g^b$ et 2) sensiblement constante.

La condition 1) est typiquement évaluée en comparant la norme du vecteur accélération $a^b$ avec une la norme de l'accélération de la pesanteur $g^b$. Pour effectuer cette comparaison, l'accélération de la pesanteur $g^b$, dont la valeur dans le repère RN est connue et stockée à l'avance, est transformée du repère RN au repère RB en utilisant l'estimation $\widehat{\mathbf{q}}^n_b$ du vecteur d'attitude.

La condition 2) est évaluée en évaluant la variance de la norme du vecteur accélération $a^b$ sur une fenêtre glissante. La durée de la fenêtre glissante est typiquement comprise entre 0,1 s et 0,2 s.

Lorsque les conditions 1) et 2) sont remplies, la vitesse de l'objet mobile est quasiment nulle ; la deuxième correction est donc une correction du type ZUPT pour « Zéro velocity UpdaTe ».

L'innovation est égale à la différence entre la valeur de la vitesse réelle et la vitesse estimée :

$$\mathbf{ino}_{ZUPT} = \mathbf{v}^n(t) - \hat{\mathbf{v}}^n(t)$$

Or la vitesse est nulle :

$$\mathbf{ino}_{ZUPT} = 0 - \hat{\mathbf{v}}^n(t) = -\hat{\mathbf{v}}^n(t)$$

La matrice de mesure de la correction, à savoir la matrice H telle que $\mathbf{ino}_{ZUPT}$ = **H.X** est donc :

$$\mathbf{H} = [0 \quad 0 \quad 0 \quad 0 \quad -I \quad 0 \quad 0 \quad 0]$$

Ainsi, pendant la deuxième correction, l'état estimé de l'EKF est corrigé en fixant à zéro le vecteur vitesse instantanée **v**.

*Troisième correction*

Une troisième correction est appliquée lorsque la norme du vecteur accélération $a^b$ mesuré est 1') sensiblement égale à la norme de l'accélération de la pesanteur $g^b$ et 2') sensiblement constante.

La condition 1') est typiquement évaluée en comparant la norme du vecteur accélération $a^b$ avec la norme de l'accélération de la pesanteur $g^b$.

Pour effectuer cette comparaison, l'accélération de la pesanteur $g^b$, dont la valeur dans le repère RN est connue et stockée à l'avance, est transformée du repère RN au repère RB en utilisant l'estimation $\widehat{\mathbf{q}}^n_b$ du vecteur d'attitude.

La condition 2') est évaluée en évaluant l'écart-type de la norme sur une fenêtre glissante. La durée de la fenêtre glissante est typiquement comprise entre 0,1 s et 0,2 s.

Lorsque les conditions 1') et 2') sont remplies, l'accélération de l'objet mobile est quasiment nulle ; la troisième correction est donc une correction du type QSA pour « Quasi-Static Accélération », qui est appliquée lorsqu'une mesure du vecteur accélération $a^b$ est disponible, ou AGU pour « Accélération Gradient Update », qui est appliquée lorsqu'une mesure du vecteur vitesse angulaire $\omega^b$ est disponible.

Dans la correction de type QSA, l'innovation correspond à la différence entre l'accélération de la pesanteur et la valeur estimée de l'accélération de l'objet mobile dans le repère de navigation RN, c'est-à-dire :

$$\mathbf{ino}_{QSA} = \mathbf{a}_{ref}^n - \hat{\mathbf{q}}_b^n(\mathbf{y}^b - \hat{\mathbf{b}}_{acc}^b)\bar{\hat{\mathbf{q}}}_b^n$$

où $\mathbf{a}_{ref}^n$ désigne l'accélération de la pesanteur $g^b$ dans le repère de navigation RN.

Dans la correction de type AGU, l'accélération est estimée grâce à sa loi d'évolution :

$$\hat{\mathbf{a}}^b(t + dt) = \hat{\mathbf{q}}_\omega(t).\hat{\mathbf{a}}^b(t).\bar{\hat{\mathbf{q}}}_\omega(t)$$

L'innovation est donc :

$$\mathbf{ino}_{AGU} = \mathbf{a}^b(t + dt) - \hat{\mathbf{a}}^b(t + dt) = (\mathbf{q}_\omega.\mathbf{a}^b(t).\bar{\mathbf{q}}_\omega) - (\hat{\mathbf{q}}_\omega.\hat{\mathbf{a}}^b(t).\bar{\hat{\mathbf{q}}}_\omega)$$

Par souci de concision, l'expression de l'innovation en fonction du vecteur d'état n'est pas présentée ici.

Ainsi, pendant la troisième correction, l'état estimé de l'EKF est corrigé en fonction du vecteur accélération mesuré $a^b$ ou du vecteur vitesse angulaire mesuré $\omega^b$.

*Troisième correction*

Une troisième correction est appliquée lorsque 1") la norme du vecteur champ magnétique local $\mathbf{B}^b$ mesuré est sensiblement constante et 2") un angle entre ledit vecteur champ magnétique local $\mathbf{B}^b$ mesuré et l'accélération de la pesanteur $g^b$ est sensiblement égal à un angle entre ladite accélération de la pesanteur $g^b$ et le vecteur champ magnétique terrestre.

La condition 1") est évaluée en comparant la norme du vecteur champ magnétique local $\mathbf{B}^b$ mesuré à la norme d'un champ magnétique de référence $\mathbf{B}_{ref}^n$ obtenu en moyennant les mesures du vecteur champ magnétique local $\mathbf{B}^b$ sur un intervalle précédant l'instant et pendant lequel le champ magnétique local $\mathbf{B}^b$ mesuré reste sensiblement constant, puis en évaluant l'écart-type de la norme sur une fenêtre glissante. La durée de la fenêtre glissante est typiquement de 0,1 s à 0,3 s.

La condition 2") est typiquement évaluée en comparant l'angle entre le vecteur champ magnétique local $\mathbf{B}^b$ mesuré et l'accélération de la pesanteur $g^b$ avec une valeur stockée à l'avance.

Pour effectuer cette comparaison, l'accélération de la pesanteur $g^b$, dont la valeur dans le repère RN est connue et stockée à l'avance, est transformée du repère RN au repère RB en utilisant l'estimation $\hat{\mathbf{q}}_b^n$ du vecteur d'attitude.

Lorsque les conditions 1") et 2") sont remplies, le champ magnétique local $\mathbf{B}^b$ mesuré au niveau de l'objet mobile est quasiment constant et coïncide quasiment avec le champ magnétique terrestre ; la troisième correction est donc une correction du type QSF pour « Quasi-Static Field », qui est appliquée lorsqu'une mesure du champ magnétique local $\mathbf{B}^b$ et une mesure du angulaire $\omega^b$ sont disponibles, ou une correction du type MARU pour « Magnetic Angle Rate Update », qui est appliquée lorsqu'une mesure du champ magnétique local $\mathbf{B}^b$ est disponible.

Dans la correction de type QSF, l'innovation est la différence entre le champ magnétique de référence et la valeur estimée du champ magnétique local $\mathbf{B}^b$ , dans le repère de navigation RN :

$$\mathbf{ino} = \mathbf{B}_{ref}^n - \hat{\mathbf{q}}_b^n(y^b)\bar{\hat{\mathbf{q}}}_b^n$$

$$\mathbf{ino} = \mathbf{B}_{ref}^n - \hat{\mathbf{q}}_b^n(\mathbf{B}^b + \eta_B)\bar{\hat{\mathbf{q}}}_b^n$$

où $\mathbf{B}_{\text{ref}}^n$ est le champ magnétique de référence et $\bar{q}$ désigne le conjugué du quaternion $q$.

Dans la correction de type MARU, l'innovation est la différence entre la valeur estimée du champ magnétique local $\mathbf{B}^b$ et la valeur mesurée :

$$\mathbf{ino}_{MARU} = \mathbf{y}_m^b(t+dt) - \widehat{\mathbf{B}}^b(t+dt)$$

Par souci de concision, l'expression de l'innovation en fonction du vecteur d'état n'est pas présentée ici.

Ainsi, pendant la troisième correction, l'état estimé de l'EKF est corrigé en fonction du vecteur champ magnétique local mesuré $\mathbf{B}^b$ et/ou du vecteur vitesse angulaire $\omega^b$ mesuré.

Expériences

Afin de tester la performance de l'EKF proposé ci-dessus, deux expériences décrites ci-dessous ont été réalisées.

*Expérience 1*

Des données ont été collectées à l'aide d'un dispositif de détermination présentant les caractéristiques suivantes :

- centrale inertielle (accéléromètre et gyromètre) commercialisée par la société Sensonor AS sous la référence STIM300-800-10g ;
- magnétomètre commercialisé par la société Honeywell sous la référence HMC5983 ;
- récepteur GNSS commercialisé par la société u-blox sous la référence NEO-8MT.

La centrale inertielle et le magnétomètre présentent une fréquence d'acquisition $f_{IMU}$ de 160 Hz. Le récepteur GNSS présente une fréquence d'acquisition $f_{GNSS}$ de 5 Hz. Toutes les données collectées ont été synchronisées en temps GPS.

L'acquisition proprement dite a été faite en parcourant à pied le parcours suivant :

1) Première phase extérieure.
2) Première phase intérieure : entrée dans le bâtiment par la porte ouest suivie de 2 tours complets dans les couloirs avec passage dans une salle.
3) Deuxième phase extérieure : sortie du bâtiment par l'accès nord.
4) Deuxième phase intérieure : entrée dans le bâtiment par l'accès est suivie d'un tour du couloir principal avec passage dans une salle.
5) Troisième phase extérieure : sortie du bâtiment par l'accès sud.

Lors de l'acquisition, la centrale inertielle a été fixée sur le pied.

Afin de tester la qualité de la détermination de la trajectoire, une trajectoire de référence a été déterminée à l'aide d'un récepteur GNSS Septentrio AsteRx21 associé à une antenne placée sur la tête. La position calculée par méthode PPK (Precise Point Kinematic) fournit pour cette trajectoire de référence une précision de l'ordre de 2 à 5 cm. Les données de ce récepteur GNSS ont été post-traitées à l'aide du logiciel RTKlib afin d'obtenir la trajectoire de référence.

La distance totale parcourue est approximativement de 1173 m. Environ 40% du temps de parcours a été effectué en intérieur.

La trajectoire déterminée et la trajectoire de référence sont visibles sur les figures 3A et 3B. La déviation entre la trajectoire déterminée et la trajectoire de référence est en moyenne de 2,74 m sur l'ensemble du parcours, avec un écart-type de 1,61 m et un maximum à 6,71 m. L'erreur commise au bout de la distance totale parcourue est d'environ 0,45%.

*Expérience 2*

Des données ont été collectées dans les mêmes conditions que dans l'expérience 1, avec un parcours différent :

6) Première phase extérieure.

7) Première phase intérieure : entrée dans le bâtiment par la porte ouest suivie de 2 tours complets dans les couloirs avec passage dans une salle.

8) Deuxième phase extérieure : sortie du bâtiment par la porte sud.

9) Deuxième phase intérieure : entrée dans le bâtiment par l'accès nord suivie de deux tours complets du couloir principal avec passage dans deux salles.

10) Troisième phase extérieure : sortie du bâtiment par l'accès sud.

La distance totale parcourue est approximativement de 1281 m. Environ 45% du temps de parcours a été effectué en intérieur.

La trajectoire déterminée et la trajectoire de référence sont visibles sur les figures 4A et 4B. La déviation entre la trajectoire déterminée et la trajectoire de référence est en moyenne de 2,46 m sur l'ensemble du parcours, avec un écart-type de 1,21 m et un maximum à 5,30 m. L'erreur commise au bout de la distance totale parcourue est d'environ 0,35%.

Les expériences 1 et 2 montrent que la solution proposée permet d'obtenir une détermination de trajectoire avec une erreur très faible, y compris lorsqu'une partie conséquente du parcours est effectuée en intérieur (utilisation dite « indoors »).

*Comparaison avec d'autres méthodes disponibles*

À titre de comparaison, la méthode proposée dans l'article « Indoor pedestrian navigation using an INS/EKF framework for yaw drift réduction and a foot-mounted IMU », A. R. Jiménez et al., 7th Workshop on Positioning, Navigation and Communication, WPNC 2010, IEEE, a permis d'atteindre une erreur de l'ordre de 1%, mais sur une distance parcourue plus courte, de 125 m environ.

Toujours à titre de comparaison, la méthode proposée dans l'article « Heterogeneous Data Fusion Algorithm for Pedestrian Navigation via Foot-Mounted Inertial Measurement Unit and Complementary Filter », H. Fourati, IEEE Transactions on Instrumentation on Measurement, 2015, pp. 221-229, a permis d'atteindre une erreur de 0,4%, mais sur une distance parcourue plus courte, de 80 m environ.

Également à titre de comparaison, la méthode proposée dans l'article « A New Zéro Velocity Update Algorithm for the Shoe-Mounted Personal Navigation System based on IMU », Z. Xiao-dong et al., 34th Chinese Control Conference, 2015, a permis d'atteindre une erreur comprise entre 0,35% et 0,5%, mais sur une distance parcourue plus courte, de 210 m environ. En outre, cette méthode nécessite une connaissance *a priori* de l'environnement sous forme de cartes d'intérieur, tandis que la solution proposée dans le présent exposé ne nécessite aucune connaissance a *priori de* l'environnement.

Modifications de l'exemple d'EKF

Il est à noter que l'exemple d'EKF présenté ci-dessus n'est qu'un exemple non limitatif et peut être modifié de plusieurs manières.

Notamment, il peut ne pas être tenu compte de la différence temporelle du décalage d'horloge du récepteur GNSS par rapport au temps GLONASS $c\delta t_{GLO}$ (c'est-à-dire que seule la différence temporelle du décalage d'horloge du récepteur GNSS par rapport au temps GPS $c\delta t_{GPS}$ est prise en compte), ou inversement.

Par ailleurs, le vecteur vitesse moyenne $\overline{\mathbf{v}}$ peut être calculé en faisant une moyenne de plus de N vecteurs vitesse instantanée **v**, par exemple de entre N et 2N vecteurs vitesse instantanée **v**.

Par ailleurs, le vecteur vitesse moyenne $\overline{\mathbf{v}}$ peut être calculé autrement qu'en faisant une moyenne arithmétique non pondérée des vecteurs vitesse instantanée **v**. Par exemple, le vecteur vitesse moyenne $\overline{\mathbf{v}}$ peut être calculé sous la forme d'une moyenne arithmétique pondérée. Dans ce cas, il est préférable que cette moyenne arithmétique pondérée fournisse un estimateur non-biaisé des vecteurs vitesse instantanée v.

Procédé de commande de l'objet mobile

Comme discuté ci-dessus, la solution proposée permet d'obtenir une détermination de trajectoire avec une erreur très faible, y compris lorsqu'une partie conséquente du parcours est effectuée en intérieur (utilisation dite « indoors »). La trajectoire déterminée peut donc être utilisée pour effectuer la commande de l'objet mobile.

Un procédé de commande de l'objet mobile comprend la détermination d'une trajectoire de l'objet mobile à l'aide du procédé de détermination décrit ci-dessus, et la commande de l'objet mobile en fonction de la trajectoire ainsi déterminée.

Ce procédé de commande est typiquement mis en oeuvre par une unité de commande (non représentée).

L'unité de commande peut être embarquée sur l'objet mobile, ou bien être une unité de commande à distance.

L'unité de calcul décrite ci-dessus en rapport avec le procédé de détermination peut être intégrée dans l'unité de commande, par exemple en étant installée dans un boîtier commun avec l'unité de commande.

En outre, l'unité de calcul décrite ci-dessus en rapport avec le procédé de détermination peut mettre en oeuvre à la fois le procédé de détermination et le procédé de commande.

Quoique la présente invention ait été décrite en se référant à des exemples de réalisation spécifiques, il est évident que des modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Procédé de détermination d'une trajectoire d'un objet mobile, le procédé étant mis en oeuvre par une unité de calcul (20, 31) et comprenant :

l'acquisition d'un vecteur accélération ($a^b$) de l'objet mobile, l'acquisition d'un vecteur vitesse angulaire ($\omega^b$) de l'objet mobile, l'acquisition d'un vecteur champ magnétique local ($\mathbf{B}^b$) au niveau de l'objet mobile, et l'acquisition d'une phase ($\phi_i$) d'un signal (56) émis par un système mondial de navigation par satellite, et

une étape de détermination, à l'aide d'un filtre de Kalman étendu, d'un état ($X_{k+1}$) du filtre de Kalman étendu, ledit état ($X_{k+1}$) comprenant un état de position (P) de l'objet mobile, un vecteur vitesse instantanée (v) de l'objet mobile, et un décalage ($c\delta_{GPS}\dfrac{\Delta dT}{\Delta t}$) entre l'horloge du récepteur satellitaire recevant ledit signal (56) et le temps du système mondial de navigation par satellite,

ladite étape de détermination comprend une étape d'estimation de l'état du filtre de Kalman étendu et, lorsqu'une mesure de l'un au moins parmi ledit vecteur accélération ($a^b$), ledit vecteur vitesse angulaire ($\omega^b$), ledit vecteur champ magnétique local ($\mathbf{B}^b$) au niveau de l'objet mobile, et ladite phase ($\phi_i$) est disponible, une étape de correction au cours de laquelle l'état estimé du filtre de Kalman étendu est corrigé en fonction d'au moins une desdites mesures disponibles,

**caractérisé en ce que**

l'état (X) du filtre de Kalman étendu comprend un vecteur vitesse moyenne ($\bar{v}$) de l'objet mobile, ledit vecteur vitesse moyenne ($\bar{v}$) étant une moyenne des vecteurs vitesses instantanée (v) de au moins N états précédents du filtre de Kalman étendu, où :

$$N = \frac{f_{IMU}}{f_{GNSS}},$$

où $f_{IMU}$ désigne la fréquence de la mesure dudit vecteur vitesse angulaire ($\omega^b$), et $f_{GNSS}$ désigne la fréquence de la mesure de ladite phase ($\phi_i$), et

durant l'étape de correction, lorsqu'une mesure de ladite phase ($\phi_i$) et une mesure précédente de ladite phase ($\phi_i$) sont disponibles, ladite mesure précédente correspondant à l'un desdits au moins N états précédents du filtre de Kalman étendu, et la mesure de ladite phase ($\phi_i$) et ladite mesure précédente concernant le signal (56) émis par un même satellite du système mondial de navigation par satellite, l'état estimé du filtre de Kalman étendu est corrigé :

en déterminant une différence temporelle de phase déterminée ($\lambda.\dfrac{\Delta\phi_{i,k}}{\Delta t}$) égale à une différence entre ladite mesure de phase et ladite mesure de phase précédente disponibles ;

en estimant une différence temporelle de phase estimée ($\lambda.\dfrac{\Delta\hat{\phi}_{i,k}}{\Delta t}$) en fonction de ladite vitesse moyenne ;

en calculant une variable d'innovation ($\text{ino}_{\text{TDCP}}$) égale à une différence entre une différence temporelle de phase déterminée ( $\lambda.\dfrac{\Delta\phi_{i,k}}{\Delta t}$ ) et une

différence temporelle de phase estimée ( $\lambda.\dfrac{\Delta\widehat{\phi}_{i,k}}{\Delta t}$ ) ; et

en corrigeant la valeur estimée de l'état du filtre de Kalman étendu en fonction de la variable d'innovation ($\text{ino}_{\text{TDCP}}$).

**2.** Procédé de détermination selon la revendication 1, dans lequel ladite moyenne est une moyenne arithmétique non pondérée.

**3.** Procédé de détermination selon la revendication 1 ou 2, dans lequel le vecteur vitesse moyenne ($\bar{\text{v}}$) est une moyenne des vecteurs vitesses instantanée (v) de exactement N états précédents du filtre de Kalman étendu.

**4.** Procédé de détermination selon l'une quelconque des revendications 1 à 3, dans lequel, durant l'étape de correction, lorsque la norme du vecteur accélération ($a^b$) mesuré est sensiblement égale à la norme de l'accélération de la pesanteur ($g^b$) et sensiblement constante, l'état estimé du filtre de Kalman étendu est corrigé en fixant à zéro le vecteur vitesse instantanée (v).

**5.** Procédé de détermination selon l'une quelconque des revendications 1 à 4, dans lequel

l'état du filtre de Kalman étendu comprend un vecteur d'attitude, et
durant l'étape de correction, lorsque la norme du vecteur accélération ($a^b$) mesuré est sensiblement égale à la norme de l'accélération de la pesanteur ($g^b$) et sensiblement constante, l'état estimé du filtre de Kalman étendu est corrigé en fonction du vecteur accélération mesuré ($a^b$) ou du vecteur vitesse angulaire mesuré ($\omega^b$).

**6.** Procédé de détermination selon l'une quelconque des revendications 1 à 5, dans lequel

l'état du filtre de Kalman étendu comprend un vecteur d'attitude, et
durant l'étape de correction, lorsque la norme du vecteur champ magnétique local ($\mathbf{B}^b$) mesuré est sensiblement constante et un angle entre ledit vecteur champ magnétique local ($\mathbf{B}^b$) mesuré et l'accélération de la pesanteur ($g^b$) est sensiblement égal à un angle entre ladite accélération de la pesanteur ($g^b$) et le vecteur champ magnétique terrestre, l'état estimé du filtre de Kalman étendu est corrigé en fonction du vecteur champ magnétique local mesuré ($\mathbf{B}^b$) et/ou du vecteur vitesse angulaire mesuré ($\omega^b$).

**7.** Procédé de détermination selon l'une quelconque des revendications 1 à 6, comprenant en outre la mesure d'une deuxième phase d'un deuxième signal (56') émis par un deuxième système mondial de navigation par satellite, et dans lequel

l'état (X) du filtre de Kalman étendu comprend un décalage ( $c\delta_{GLO}\dfrac{\Delta dT}{\Delta t}$ ) entre l'horloge du récepteur satellitaire (36) et le temps du deuxième système mondial de navigation par satellite, et
durant l'étape de correction, lorsqu'une mesure de ladite deuxième phase et une deuxième mesure précédente de ladite deuxième phase ($\phi_i$) sont disponibles, ladite deuxième mesure précédente correspondant à l'un desdits au moins N états précédents du filtre de Kalman étendu, et la mesure de ladite deuxième phase ($\phi_i$) et ladite deuxième mesure précédente concernant le signal (56') émis par un même satellite du deuxième système mondial de navigation par satellite, l'état estimé du filtre de Kalman étendu est corrigé en fonction de la différence entre ladite mesure de la deuxième phase et ladite deuxième mesure précédente.

**8.** Procédé selon l'une quelconque des revendications 1 à 7, comprenant en outre la transmission de la trajectoire déterminée.

**9.** Procédé selon l'une quelconque des revendications 1 à 8, comprenant en outre l'affichage de la trajectoire déterminée.

**10.** Programme d'ordinateur comportant des instructions pour l'exécution du procédé de détermination selon l'une quelconque des revendications 1 à 9 lorsque ledit programme est exécuté par un ordinateur.

**11.** Support d'enregistrement lisible par ordinateur sur lequel est enregistré un programme d'ordinateur comportant des instructions pour l'exécution du procédé de détermination selon l'une quelconque des revendications 1 à 9.

**12.** Procédé de commande d'un objet mobile, le procédé de commande comprenant :

la détermination d'une trajectoire de l'objet mobile à l'aide du procédé de détermination selon l'une quelconque des revendications 1 à 9 ; et
la commande de l'objet mobile en fonction de la trajectoire ainsi déterminée.

**13.** Dispositif (10) de détermination d'une trajectoire d'un objet mobile, le dispositif comprenant :

un accéléromètre (33) configuré pour mesurer un vecteur accélération ($a^b$) ;
un gyromètre (34) configuré pour mesurer un vecteur vitesse angulaire ($\omega^b$) ;
un magnétomètre (35) configuré pour mesurer un vecteur champ magnétique local ($\mathbf{B}^b$) ;
un récepteur satellitaire (36) configuré pour mesurer une phase ($\phi_i$) d'un signal (56) émis par un système mondial de navigation par satellite ; et
une unité de calcul (20, 31) configurée pour mettre en oeuvre une détermination à l'aide d'un filtre de Kalman étendu d'un état ($X_{k+1}$) du filtre de Kalman étendu, ledit état ($X_{k+1}$) comprenant un état de position de l'objet mobile, un vecteur vitesse instantanée (v) de l'objet mobile, et un décalage ($c\delta_{GPS}\frac{\Delta dT}{\Delta t}$) entre l'horloge du récepteur satellitaire (36) et le temps du système mondial de navigation par satellite,
ladite détermination comprenant une étape d'estimation de l'état du filtre de Kalman étendu et, lorsqu'une mesure de l'un au moins parmi ledit vecteur accélération ($a^b$), ledit vecteur vitesse angulaire ($\omega^b$), ledit vecteur champ magnétique local ($\mathbf{B}^b$) au niveau de l'objet mobile, et ladite phase ($\phi_i$) est disponible, une étape de correction au cours de laquelle l'état estimé du filtre de Kalman étendu est corrigé en fonction d'au moins une desdites mesures disponibles,
**caractérisé en ce que**
l'état (X) du filtre de Kalman étendu comprend un vecteur vitesse moyenne ($\bar{v}$) de l'objet mobile, ledit vecteur vitesse moyenne ($\bar{v}$) étant une moyenne des vecteurs vitesses instantanée (v) de au moins N états précédents du filtre de Kalman étendu, où :

$$N = \frac{f_{IMU}}{f_{GNSS}},$$

où $f_{IMU}$ désigne la fréquence de la mesure ($\omega^b$) dudit vecteur vitesse angulaire, et $f_{GNSS}$ désigne la fréquence de la mesure de ladite phase ($\phi_i$), et
durant l'étape de correction, lorsqu'une mesure de ladite phase ($\phi_i$) et une mesure précédente de ladite phase ($\phi_i$) sont disponibles, ladite mesure précédente correspondant à l'un desdits au moins N états précédents du filtre de Kalman étendu, et la mesure de ladite phase ($\phi_i$) et ladite mesure précédente concernant le signal (56) émis par un même satellite du système mondial de navigation par satellite, l'état estimé du filtre de Kalman étendu est corrigé : en déterminant une différence temporelle de phase déterminée ($\lambda.\frac{\Delta\phi_{i,k}}{\Delta t}$) égale à une différence entre ladite mesure de phase et ladite mesure de phase précédente disponibles ;
en estimant une différence temporelle de phase estimée ($\lambda.\frac{\Delta\hat{\phi}_{i,k}}{\Delta t}$) en fonction de ladite vitesse moyenne ;
en calculant une variable d'innovation ($ino_{TDCP}$) égale à une différence entre une différence temporelle de phase déterminée ($\lambda.\frac{\Delta\phi_{i,k}}{\Delta t}$) et une différence temporelle de phase estimée ($\lambda.\frac{\Delta\hat{\phi}_{i,k}}{\Delta t}$) ; et
en corrigeant la valeur estimée de l'état du filtre de Kalman étendu en fonction de la variable d'innovation ($ino_{TDCP}$.

**14.** Dispositif selon la revendication 13, dans lequel ladite moyenne est une moyenne arithmétique non pondérée.

**15.** Dispositif selon la revendication 13 ou 14, dans lequel le vecteur vitesse moyenne ($\overline{v}$) est une moyenne des vecteurs vitesses instantanée (v) de exactement N états précédents du filtre de Kalman étendu.

**Patentansprüche**

**1.** Verfahren zur Bestimmung einer Bewegungsbahn eines beweglichen Objekts, wobei das Verfahren von einer Recheneinheit (20, 31) umgesetzt wird und umfasst:

das Erfassen eines Beschleunigungsvektors ($a^b$) des beweglichen Objekts, das Erfassen eines Winkelgeschwindigkeitsvektors ($\omega^b$) des beweglichen Objekts, das Erfassen eines lokalen Magnetfeldvektors ($B^b$) im Bereich des beweglichen Objekts und das Erfassen einer Phase ($\phi_i$) eines von einem weltweiten Satellitennavigationssystem gesendeten Signals (56), und
einen Schritt des Bestimmens, mit Hilfe eines erweiterten Kalman-Filters, eines Zustands ($X_{k+1}$) des erweiterten Kalman-Filters, wobei der Zustand ($X_{k+1}$) einen Positionszustand (P) des beweglichen Objekts umfasst, einen Vektor der Momentangeschwindigkeit (v) des beweglichen Objekts und eine Abweichung $c\delta_{GPS}\frac{\Lambda d\tau}{\Delta t}$ zwischen dem Zeitmesser des Satellitenempfängers, der das Signal (56) empfängt, und der Zeit des weltweiten Satellitennavigationssystems,
wobei der Bestimmungsschritt einen Schritt des Schätzens des Zustands des erweiterten Kalman-Filters umfasst und, wenn eine Messung von mindestens einem von dem Beschleunigungsvektor ($a^b$), dem Winkelgeschwindigkeitsvektor ($\omega^b$), dem lokalen Magnetfeldvektor ($B^b$) im Bereich des beweglichen Objekts und die Phase ($\phi_i$) verfügbar ist, einen Korrekturschritt, bei dem der geschätzte Zustand des erweiterten Kalman-Filters in Abhängigkeit von mindestens einer der verfügbaren Messungen korrigiert wird,
**dadurch gekennzeichnet, dass**
der Zustand ($X$) des erweiterten Kalman-Filters einen Vektor der mittleren Geschwindigkeit ($\overline{v}$) des beweglichen Objekts umfasst, wobei der Vektor der mittleren Geschwindigkeit ($\overline{v}$) ein Mittelwert der Vektoren der momentanen Geschwindigkeiten (v) von mindestens N vorherigen Zuständen des erweiterten Kalman-Filters ist, wobei:

$$N = \frac{f_{IMU}}{f_{GNSS}}$$

wobei $f_{IMU}$ die Häufigkeit der Messung des Winkelgeschwindigkeitsvektors ($\omega^b$) bezeichnet und $f_{GNSS}$ die Häufigkeit der Messung der Phase ($\phi_i$) bezeichnet, und
während des Korrekturschritts, wenn eine Messung der Phase ($\phi_i$) und eine vorherige Messung der Phase ($\phi_i$) verfügbar sind, wobei die vorherige Messung einem der mindestens N vorherigen Zustände des erweiterten Kalman-Filters entspricht und die Messung der Phase ($\phi_i$) und die vorherige Messung das von demselben Satelliten des weltweiten Satellitennavigationssystems gesendete Signal (56) betrifft, der geschätzte Zustand des erweiterter Kalman-Filters korrigiert wird:

durch Bestimmen einer bestimmten temporären Phasendifferenz ($\lambda.\frac{\Delta\phi_{i,k}}{\Delta t}$) gleich einer Differenz zwischen der verfügbaren Phasenmessung und der verfügbaren vorherigen Phasenmessung;

durch Schätzen einer geschätzten temporären Phasendifferenz ($\lambda.\frac{\Delta\phi_{i,k}}{\Delta t}$) in Abhängigkeit von der mittleren Geschwindigkeit;
durch Berechnen eine Innovationsvariablen ($ino_{TDCP}$) gleich einer Differenz zwischen einer bestimmten temporären Phasendifferenz ($\lambda.\frac{\Delta\phi_{i,k}}{\Delta t}$) und einer geschätzten temporären Phasendifferenz ($\lambda.\frac{\Delta\phi_{i,k}}{\Delta t}$); und
durch Korrigieren des geschätzten Werts des Zustands des erweiterten Kalman-Filters in Abhängigkeit von der Innovationsvariablen ($ino_{TDCP}$).

**2.** Bestimmungsverfahren nach Anspruch 1, wobei der Mittelwert ein nicht gewichteter arithmetischer Mittelwert ist.

**3.** Bestimmungsverfahren nach Anspruch 1 oder 2, wobei der Vektor der mittleren Geschwindigkeit ($\overline{v}$) ein Mittelwert der Vektoren der momentanen Geschwindigkeiten (v) von genau N vorherigen Zuständen des erweiterter Kalman-Filters ist.

**4.** Bestimmungsverfahren nach einem der Ansprüche 1 bis 3, wobei während des Korrekturschritts, wenn die Norm des gemessenen Beschleunigungsvektors ($a^b$) etwa gleich der Norm der Erdbeschleunigung ($g^b$) und etwa konstant ist, der geschätzte Zustand des erweiterter Kalman-Filters durch Festlegen des Vektors der Momentangeschwindigkeit (v) auf null korrigiert wird.

**5.** Bestimmungsverfahren nach einem der Ansprüche 1 bis 4, wobei

der Zustand des erweiterter Kalman-Filters einen Haltungsvektor umfasst, und
während des Korrekturschritts, wenn die Norm des gemessenen Beschleunigungsvektors ($a^b$) etwa gleich der Norm der Erdbeschleunigung ($g^b$) und etwa konstant ist, der geschätzte Zustand des erweiterter Kalman-Filters in Abhängigkeit von dem gemessenen Beschleunigungsvektor ($a^b$) oder von dem gemessenen Winkelgeschwindigkeitsvektor ($\omega^b$) korrigiert wird.

**6.** Bestimmungsverfahren nach einem der Ansprüche 1 bis 5, wobei

der Zustand des erweiterter Kalman-Filters einen Haltungsvektor umfasst, und
während des Korrekturschritts, wenn die Norm des gemessenen lokalen Magnetfeldvektors ($B^b$) etwa konstant ist und ein Winkel zwischen dem gemessenen lokalen Magnetfeldvektor ($B^b$) und der Erdbeschleunigung ($g^b$) etwa gleich einem Winkel zwischen der Erdbeschleunigung ($g^b$) und dem Vektor des Erdmagnetfelds ist, der geschätzte Zustand des erweiterter Kalman-Filters in Abhängigkeit von dem gemessenen lokalen Magnetfeldvektor ($B^b$) und/oder dem gemessenen Winkelgeschwindigkeitsvektor ($\omega^b$) korrigiert wird.

**7.** Bestimmungsverfahren nach einem der Ansprüche 1 bis 6, das ferner die Messung einer zweiten Phase eines von einem zweiten weltweiten Satellitennavigationssystem gesendeten zweiten Signals (56') umfasst und wobei

der Zustand ($X$) des erweiterten Kalman-Filters eine Abweichung $c\delta_{GPS} \frac{\Delta dT}{\Delta t}$ zwischen dem Zeitmesser des Satellitenempfängers (36) und der Zeit des zweiten weltweiten Satellitennavigationssystems umfasst, und während des Korrekturschritts, wenn eine Messung der zweiten Phase und eine vorherige zweite Messung der zweiten Phase ($\phi_i$) verfügbar sind, wobei die vorherige zweite Messung einem der mindestens N vorherigen Zustände des erweiterten Kalman-Filters entspricht und die Messung der zweiten Phase ($\phi_i$) und die vorherige zweite Messung das von demselben Satelliten des zweiten weltweiten Satellitennavigationssystems gesendete Signal (56') betrifft, der geschätzte Zustand des erweiterter Kalman-Filters in Abhängigkeit von der Differenz zwischen der Messung der zweiten Phase und der vorherigen zweiten Messung korrigiert wird.

**8.** Verfahren nach einem der Ansprüche 1 bis 7, das ferner die Übertragung der bestimmten Bewegungsbahn umfasst.

**9.** Verfahren nach einem der Ansprüche 1 bis 8, das ferner die Anzeige der bestimmten Bewegungsbahn umfasst.

**10.** Rechnerprogramm, das Befehle für die Ausführung des Bestimmungsverfahrens nach einem der Ansprüche 1 bis 9 aufweist, wenn das Programm von einem Rechner ausgeführt wird.

**11.** Rechnerlesbares Speichermedium, auf dem ein Rechnerprogramm gespeichert ist, das Befehle für die Ausführung des Bestimmungsverfahrens nach einem der Ansprüche 1 bis 9 aufweist.

**12.** Verfahren zur Steuerung eines beweglichen Objekts, wobei das Steuerungsverfahren umfasst:

das Bestimmen einer Bewegungsbahn des beweglichen Objekts mit Hilfe des Bestimmungsverfahrens nach einem der Ansprüche 1 bis 9; und
das Steuern des beweglichen Objekts in Abhängigkeit von der derart bestimmten Bewegungsbahn.

**13.** Vorrichtung (10) zum Bestimmen einer Bewegungsbahn eines beweglichen Objekts, wobei die Vorrichtung umfasst:

einen Beschleunigungsmesser (33), der ausgelegt ist, um einen Beschleunigungsvektor ($a^b$) zu messen;
ein Gyrometer (34), das ausgelegt ist, um einen Winkelgeschwindigkeitsvektor ($\omega^b$) zu messen;
ein Magnetometer (35), das ausgelegt ist, um einen lokalen Magnetfeldvektor ($B^b$) zu messen;
einen Satellitenempfänger (36), der ausgelegt ist, um eine Phase ($\phi_i$) eines von einem weltweiten Satellitennavigationssystem gesendeten Signals (56) zu messen; und

eine Recheneinheit (20, 31), die ausgelegt ist, um eine Bestimmung mit Hilfe eines erweiterten Kalman-Filters eines Zustands ($X_{k+1}$) des erweiterten Kalman-Filters durchzuführen, wobei der Zustand ($X_{k+1}$) einen Positionszustand des beweglichen Objekts, einen Vektor der Momentangeschwindigkeit (v) des beweglichen Objekts und eine Abweichung ( $c\delta_{GPS}\frac{\Delta dT}{\Delta t}$ ) zwischen dem Zeitmesser des Satellitenempfängers (36) und der Zeit des weltweiten Satellitennavigationssystems umfasst,

wobei die Bestimmung einen Schritt des Schätzens des Zustands des erweiterten Kalman-Filters umfasst und, wenn eine Messung von mindestens einem von dem Beschleunigungsvektor ($a^b$), dem Winkelgeschwindigkeitsvektor ($\omega^b$), dem lokalen Magnetfeldvektor ($B^b$) im Bereich des beweglichen Objekts und die Phase ($\phi_i$) verfügbar ist, einen Korrekturschritt, bei dem der geschätzte Zustand des erweiterten Kalman-Filters in Abhängigkeit von mindestens einer der verfügbaren Messungen korrigiert wird,

**dadurch gekennzeichnet, dass**

der Zustand ($X$) des erweiterten Kalman-Filters einen Vektor der mittleren Geschwindigkeit ($\bar{v}$) des beweglichen Objekts umfasst, wobei der Vektor der mittleren Geschwindigkeit ($\bar{v}$) ein Mittelwert der Vektoren der momentanen Geschwindigkeiten (v) von mindestens N vorherigen Zuständen des erweiterten Kalman-Filters ist, wobei:

$$N = \frac{f_{IMU}}{f_{GNSS}}$$

wobei $f_{IMU}$ die Häufigkeit der Messung des Winkelgeschwindigkeitsvektors ($\omega^b$) bezeichnet und $f_{GNSS}$ die Häufigkeit der Messung der Phase ($\phi_i$) bezeichnet, und

während des Korrekturschritts, wenn eine Messung der Phase ($\phi_i$) und eine vorherige Messung der Phase ($\phi_i$) verfügbar sind, die vorherige Messung einem der mindestens N vorherigen Zustände des erweiterten Kalman-Filters entspricht und die Messung der Phase ($\phi_i$) und die vorherige Messung das vom gleichen Satelliten des weltweiten Satellitennavigationssystems gesendeten Signal (56) betrifft, der geschätzte Zustand des erweiterter Kalman-Filters korrigiert wird: durch Bestimmen einer bestimmten temporären Phasendifferenz ( $\lambda.\frac{\Delta\phi_{i,k}}{\Delta t}$ ) gleich einer Differenz zwischen der verfügbaren Phasenmessung und der verfügbaren vorherigen Phasenmessung;

durch Schätzen einer geschätzten temporären Phasendifferenz ( $\lambda.\frac{\Delta\phi_{i,k}}{\Delta t}$ ) in Abhängigkeit von der mittleren Geschwindigkeit;

durch Berechnen eine Innovationsvariablen ($ino_{TDCP}$) gleich einer Differenz zwischen einer bestimmten temporären Phasendifferenz ( $\lambda.\frac{\Delta\phi_{i,k}}{\Delta t}$ ) und einer geschätzten temporären Phasendifferenz ( $\lambda.\frac{\Delta\phi_{i,k}}{\Delta t}$ ) ; und

durch Korrigieren des geschätzten Werts des Zustands des erweiterten Kalman-Filters in Abhängigkeit von der Innovationsvariablen ($ino_{TDCP}$).

**14.** Vorrichtung nach Anspruch 13, wobei der Mittelwert ein nicht gewichteter arithmetischer Mittelwert ist.

**15.** Vorrichtung nach Anspruch 13 oder 14, wobei der Vektor der mittleren Geschwindigkeit ($\bar{v}$) ein Mittelwert der Vektoren der momentanen Geschwindigkeiten (v) von genau N vorherigen Zuständen des erweiterter Kalman-Filters ist.


**Claims**

**1.** A method for determining a trajectory of a moving object, the method being implemented by a calculation unit (20, 31) and comprising:

the acquisition of an acceleration vector ($a^b$) of the moving object, the acquisition of an angular velocity vector ($\omega^b$) of the moving object, the acquisition of a local magnetic field vector ($B^b$) at the level of the moving object, and the acquisition of a phase ($\phi_i$) of a signal (56) emitted by a global navigation satellite system, and

a step of determining, using an extended Kalman filter, a state ($X_{k+1}$) of the extended Kalman filter, said state

($X_{k+1}$) comprising a state of position (P) of the moving object, an instantaneous velocity vector (v) of the moving object, and an offset ( $c\delta_{GPS}\frac{\Delta dT}{\Delta t}$ ) between the clock of the satellite receiver receiving said signal (56) and the time of the global navigation satellite system,

said determination step comprises a step of estimating the state of the extended Kalman filter and, when a measurement of the at least one among said acceleration vector ($a^b$), said angular velocity vector ($\omega^b$), said local magnetic field vector ($B^b$) at the level of the moving object, and said phase ($\phi_i$) is available, a correction step during which the estimated state of the extended Kalman filter is corrected as a function of at least one of said available measurements,

**characterized in that**

the state (X) of the extended Kalman filter comprises an average velocity vector ($\overline{v}$) of the moving object, said average velocity vector ($\overline{v}$) being an average of the instantaneous velocity vectors (v) of at least N previous states of the extended Kalman filter, where:

$$N = \frac{f_{IMU}}{f_{GNSS}}$$

where $f_{IMU}$ designates the frequency of the measurement of said angular velocity vector ($\omega^b$), and $f_{GNSS}$ designates the frequency of the measurement of said phase ($\phi_i$), and

during the correction step, when a measurement of said phase ($\phi_i$) and a previous measurement of said phase ($\phi_i$) are available, said previous measurement corresponding to one of said at least N previous states of the extended Kalman filter, and the measurement of said phase ($\phi_i$) and said previous measurement regarding the signal (56) emitted by the same satellite of the global navigation satellite system, the estimated state of the extended Kalman filter is corrected:

by determining a determined phase time difference ( $\lambda.\frac{\Delta\phi_{i,k}}{\Delta t}$ ) equal to a difference between said available phase measurement and said available previous phase measurement;

by estimating an estimated phase time difference ( $\lambda.\frac{\Delta\widehat{\phi}_{i,k}}{\Delta t}$ ) as a function of said average velocity;

by calculating an innovation variable ($ino_{TDCP}$) equal to a difference between a determined phase time difference ( $\lambda.\frac{\Delta\phi_{i,k}}{\Delta t}$ ) and an estimated phase time difference ( $\lambda.\frac{\Delta\widehat{\phi}_{i,k}}{\Delta t}$ ); and

by correcting the estimated value of the state of the extended Kalman filter as a function of the innovation variable ($ino_{TDCP}$).

2. The determination method according to claim 1, wherein said average is an unweighted arithmetic average.

3. The determination method according to claim 1 or 2, wherein the average velocity vector ($\overline{v}$) is an average of the instantaneous velocity vectors (v) of exactly N previous states of the extended Kalman filter.

4. The determination method according to any one of claims 1 to 3, wherein, during the correction step, when the norm of the measured acceleration vector ($a^b$) is substantially equal to the norm of the gravitational acceleration ($g^b$) and substantially constant, the estimated state of the extended Kalman filter is corrected by setting the instantaneous velocity vector (v) to zero.

5. The determination method according to any one of claims 1 to 4, wherein

the state of the extended Kalman filter comprises an attitude vector, and
during the correction step, when the norm of the measured acceleration vector ($a^b$) is substantially equal to the norm of the gravitational acceleration ($g^b$) and substantially constant, the estimated state of the extended Kalman filter is corrected as a function of the measured acceleration vector ($a^b$) or the measured angular velocity vector ($\omega^b$).

6. The determination method according to any one of claims 1 to 5, wherein

the state of the extended Kalman filter comprises an attitude vector, and

during the correction step, when the norm of the measured local magnetic field vector ($B^b$) is substantially constant and an angle between said measured local magnetic field vector ($B^b$) and the gravitational acceleration ($g^b$) is substantially equal to a angle between said gravitational acceleration ($g^b$) and the earth's magnetic field vector, the estimated state of the extended Kalman filter is corrected as a function of the measured local magnetic field vector ($B^b$) and/or of the measured angular velocity vector ($\omega^b$).

7. The determination method according to any one of claims 1 to 6, further comprising the measurement of a second phase of a second signal (56') emitted by a second global navigation satellite system, and wherein

the state (X) of the extended Kalman filter comprises an offset ( $c\delta_{GLO}\frac{\Delta dT}{\Delta t}$ ) between the clock of the satellite receiver (36) and the time of the second global navigation satellite system, and

during the correction step, when a measurement of said second phase and a second previous measurement of said second phase ($\phi_i$) are available, said second previous measurement corresponding to one of said at least N previous states of the extended Kalman filter, and the measurement of said second phase ($\phi_i$) and said second previous measurement regarding the signal (56') emitted by the same satellite of the second global navigation satellite system, the estimated state of the extended Kalman filter is corrected as a function of the difference between said measurement of the second phase and said second previous measurement.

8. The determination method according to any one of claims 1 to 7, further comprising the transmission of the determined trajectory.

9. The determination method according to any one of claims 1 to 8, further comprising the display of the determined trajectory.

10. A computer program including instructions for the execution of the determination method according to any one of claims 1 to 9 when said program is executed by a computer.

11. A computer-readable recording medium on which is recorded a computer program including instructions for the execution of the determination method according to any one of claims 1 to 9.

12. A method for controlling a moving object, the control method comprising:

the determination of a trajectory of the moving object using the determination method according to any one of claims 1 to 9; and

the control of the moving object as a function of the thus determined trajectory.

13. A device (10) for determining a trajectory of a moving object, the device comprising:

an accelerometer (33) configured to measure an acceleration vector ($a^b$);
a gyrometer (34) configured to measure an angular velocity vector ($\omega^b$);
a magnetometer (35) configured to measure a local magnetic field vector ($B^b$);
a satellite receiver (36) configured to measure a phase ($\phi_i$) of a signal (56) emitted by a global navigation satellite system; and
a calculation unit (20, 31) configured to implement a determination using an extended Kalman filter of a state ($X_{k+1}$) of the extended Kalman filter, said state ($X_{k+1}$) comprising a state of position of the moving object, an instantaneous velocity vector (v) of the moving object, and an offset ( $c\delta_{GPS}\frac{\Delta dT}{\Delta t}$ ) between the clock of the satellite receiver (36) and the time of the global navigation satellite system,
said determination comprising a step of estimating the state of the extended Kalman filter and, when a measurement of the at least one among said acceleration vector ($a^b$), said angular velocity vector ($\omega^b$), said local magnetic field vector ($B^b$) at the level of the moving object, and said phase ($\phi_i$) is available, a correction step during which the estimated state of the extended Kalman filter is corrected as a function of at least one of said available measurements,
**characterized in that**
the state (X) of the extended Kalman filter comprises an average velocity vector ($\overline{v}$) of the moving object, said

average velocity vector ($\bar{v}$) being an average of the instantaneous velocity vectors (v) of at least N previous states of the extended Kalman filter, where:

$$N = \frac{f_{IMU}}{f_{GNSS}}$$

where $f_{IMU}$ designates the frequency of the measurement ($\omega^b$) of said angular velocity vector, and $f_{GNSS}$ designates the frequency of the measurement of said phase ($\phi_i$), and

during the correction step, when a measurement of said phase ($\phi_i$) and a previous measurement of said phase ($\phi_i$) are available, said previous measurement corresponding to one of said at least N previous states of the extended Kalman filter, and the measurement of said phase ($\phi_i$) and said previous measurement regarding the signal (56) emitted by the same satellite of the global navigation satellite system, the estimated state of the extended Kalman filter is corrected:

by determining a determined phase time difference ( $\lambda . \frac{\Delta\phi_{i,k}}{\Delta t}$ ) equal a difference between said available phase measurement and said available previous phase measurement;

by estimating an estimated phase time difference ( $\lambda . \frac{\Delta\hat{\phi}_{i,k}}{\Delta t}$ ) as a function of said average velocity;
by calculating an innovation variable ($ino_{TDCP}$) equal to a difference between a determined phase time

difference ( $\lambda . \frac{\Delta\phi_{i,k}}{\Delta t}$ ) and an estimated phase time difference ( $\lambda . \frac{\Delta\hat{\phi}_{i,k}}{\Delta t}$ ); and
by correcting the estimated value of the state of the extended Kalman filter as a function of the innovation variable ($ino_{TDCP}$).

14. The determination device according to claim 13, wherein said average is an unweighted arithmetic average.

15. The determination device according to claim 13 or 14, wherein the average velocity vector ($\bar{v}$) is an average of the instantaneous velocity vectors (v) of exactly N previous states of the extended Kalman filter.

FIG.1

FIG.2

## FIG.3A

## FIG.3B

FIG.4A

FIG.4B

## RÉFÉRENCES CITÉES DANS LA DESCRIPTION

**Littérature non-brevet citée dans la description**

- **Z. XIAO-DONG.** A New Zéro Velocity Update Algorithm for the Shoe-Mounted Personal Navigation System based on IMU. *34th Chinese Control Conférence,* 2015
- **MOHINDER S. GREWAL ; ANGUS P. ANDREWS.** Kalman Filtering: Theory and Practice Using MATLAB. John Wiley & Sons, 2001
- Indoor pedestrian navigation using an INS/EKF framework for yaw drift réduction and a foot-mounted IMU. **A. R. JIMÉNEZ et al.** 7th Workshop on Positioning, Navigation and Communication. IEEE, 2010
- **H. FOURATI.** Heterogeneous Data Fusion Algorithm for Pedestrian Navigation via Foot-Mounted Inertial Measurement Unit and Complementary Filter. *IEEE Transactions on Instrumentation on Measurement,* 2015, 221-229
- **Z. XIAO-DONG et al.** A New Zéro Velocity Update Algorithm for the Shoe-Mounted Personal Navigation System based on IMU. *34th Chinese Control Conference,* 2015